# EUROPEAN PATENT APPLICATION

(11) **EP 2 631 796 A1**
(43) Date of publication of application: **28.08.2013**
(21) Application number: 12198049.4
(22) Date of filing: 19.12.2012
(51) Int. Cl.: G06F 9/455

(54) **Data collection method and information processing system**

(30) Priority: 27.02.2012 JP 2012039583
(71) Applicant: FUJITSU LIMITED, Kawasaki-shi, Kanagawa 211-8588 (JP)
(72) Inventor: Higuchi, Junichi, Kanagawa, 211-8588 (JP); Yokoyama, Ken, Kanagawa, 211-8588 (JP); Iwakura, Hirokazu, Kanagawa, 211-8588 (JP)
(74) Representative: HOFFMANN EITLE

(57) **Abstract**

According to a data collection method, an allocation determination unit detects one or more pairs of virtual machines communicating with each other from virtual machines on the basis of communication data exchanged between the virtual machines. The allocation determination unit selects one of information processing apparatuses, and determines how to reallocate the virtual machines in order that, out of the detected pairs, at least one of paired virtual machines running on a nan-selected information processing apparatus runs on the selected information processing apparatus. A control unit reallocates the virtual machines in accordance with the determined reallocation, and controls the selected information processing apparatus so as to collect communication data relayed by the relay unit running on the selected information processing apparatus.

## Description

### FIELD

The embodiments discussed herein are related to a data collection method and information processing system.

### BACKGROUND

At present, in the field of information processing, virtualization technology is used to run a plurality of virtual computers (also called virtual machines or logical hosts) on a physical computer (also called a physical machine or physical host). Software products such as Operating System (OS) are executable on each virtual machine. A physical machine employing the virtualization technology executes a software program for managing the plurality of virtual machines.

For example, a software application called a hypervisor allocates a plurality of virtual machines the processing power of a Central Processing Unit (CPU) and the memory area of a Random Access Memory (RAM) as computational resources. In addition, for example, the hypervisor uses the resources to execute a function (also called a virtual switch) of relaying communication data between virtual machines on a physical machine. By so doing, a network of the virtual machines is configured on the physical machine. In this way, there is configured an information processing system which includes a plurality of physical machines and in which services provided by a plurality of virtual machines running on the physical machines are available from client devices.

In such an information processing system, the operating states of virtual machines may be monitored. For example, one of proposals is to run a virtual machine (virtual probe) on a physical server to collect, using a mirroring technique, packets between virtual machines relayed by a virtual switch, and detect a change in the setting of the virtual machines on the physical servers based on the packets collected by the virtual probe.

Another proposal is to monitor the utilization of physical Network Interface Cards (NIC) provided in a physical machine, and if virtual machines perform communication using a physical NIC whose utilization exceeds an upper limit, re-assign a low priority virtual machine a physical NIC with low utilization for use in communication.

In this connection, there is also a proposal of acquiring information indicating a data amount of communication from a relay device that relays communication between a communication apparatus and a network and obtaining the communication load on the communication apparatus based on the information. This proposal reduces the workload of the communication apparatus more than the case where the communication apparatus itself measures the communication load.

Further, there is yet another proposal of analyzing the transaction processing state in a system where a plurality of servers cooperate with each other, by collecting messages between the servers over the network and combining and analyzing the collected messages.

Please see, for example, Japanese Unexamined Patent Publications Nos. 2012-4781, 2009-176103, 2008-271050, and 2006-11683.

For some service processing, a plurality of virtual machines on different physical machines may cooperate with each other. In this case, the service performance may be monitored by collecting all data communicated between the virtual machines relating to the service from virtual switches that relay the communication between the virtual machines. To this end, a virtual machine for data collection is run on a specified physical machine. However, this case has a problem of how the virtual machine for data collection efficiently collects data relayed by the virtual machines on different physical machines.

For example, in the case where virtual machines running on physical machines other than the specified physical machine communicate with each other, it is hard for the virtual machine for data collection to acquire communication data between these virtual machines. To solve this problem, a considerable method is that data relayed by a virtual switch on each physical machine is copied and sent to the virtual machine for the data collection running on the specified physical machine over a network connecting the physical machines. However, the forwarding of the copied data on the network increases the load on the network during monitoring, which results in efficiency losses.

### SUMMARY

According to one aspect, the invention is intended to provide a data collection method and information processing system that enables efficient data collection.

According to one embodiment, there is provided a data collection method for collecting communication data in a system including a plurality of information processing apparatuses each hosting virtual machines and a relay unit for relaying communication data of the virtual machines. The data collection method includes: detecting one or more pairs of virtual machines communicating with each other from a plurality of virtual machines based on communication data exchanged between the plurality of virtual machines; selecting one of the plurality of information processing apparatuses, and reallocating the plurality of virtual machines in order that, out of the detected one or more pairs, one or both of paired virtual machines running on a non-selected information processing apparatus run on the selected information processing apparatus; and collecting the communication data relayed by the relay unit running on the selected information processing apparatus.

### BRIEF DESCRIPTION OF DRAWINGS

FIGS. 1A and 1B illustrate an information processing system according to a first embodiment;
FIG. 2 illustrates an information processing system according to a second embodiment;
FIG. 3 illustrates example hardware components of an execution server;
FIGS. 4 and 5 illustrate an example allocation of virtual machines;
FIG. 6 illustrates example software components according to the second embodiment;
FIG. 7 illustrates an example of communication routes;
FIG. 8 illustrates an example of a physical server resource management table;
FIG. 9 illustrates an example of a VM resource management table;
FIG. 10 illustrates an example of collected communication data;
FIG. 11 illustrates an example of a pair connection table;
FIG. 12 illustrates an example of a communicating pair table;
FIG. 13 illustrates an example of a captured object candidate table;
FIG. 14 illustrates an example of a VM placement plan table;
FIG. 15 is a flowchart of a data collection process;
FIG. 16 is a flowchart illustrating an example of how to determine captured object candidates;
FIG. 17 is a flowchart illustrating an example of how to determine a placement of virtual machines;
FIGS. 18 and 19 illustrate a specific example of determining a placement of virtual machines;
FIG. 20 illustrates a connection example after reallocation;
FIG. 21 illustrates an example of communication routes after reallocation;
FIG. 22 illustrates an example of data collection at the time of monitoring; and
FIG. 23 illustrates another example of data collection at the time of monitoring.

### DESCRIPTION OF EMBODIMENTS

Several embodiments will be described below with reference to the accompanying drawings, wherein like reference numerals refer to like elements throughout.

### (a) First Embodiment

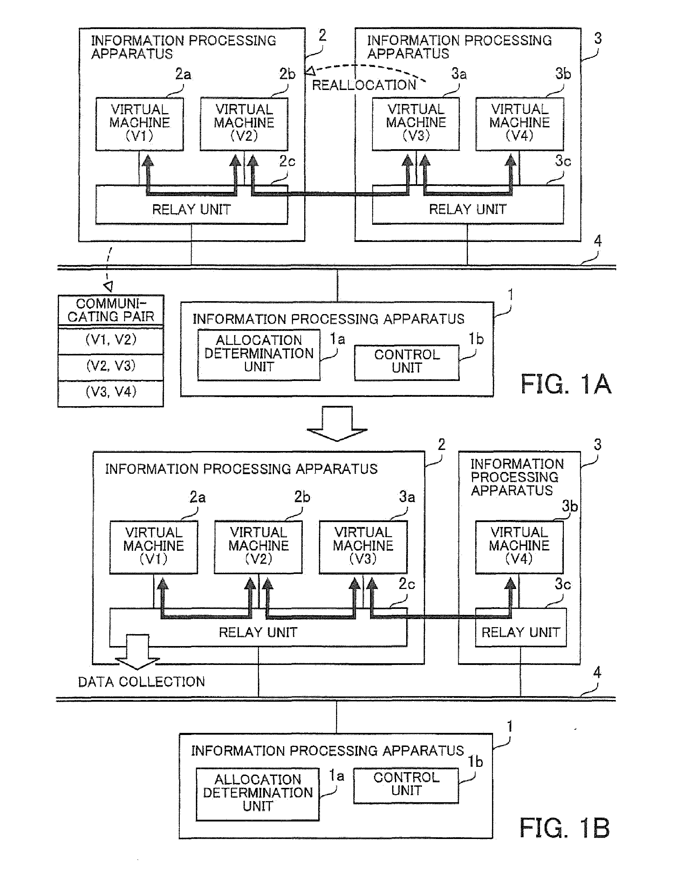

FIGS. 1A and 1B illustrate an information processing system according to a first embodiment. This information processing system includes information processing apparatuses 1, 2, and 3 that are connected to each other over a network 4. Each of the information processing apparatuses 1, 2, and 3 may be provided with a processor such as a CPU and a memory such as a RAM, or may be a computer that executes a program stored in a memory with a processor.

The information processing apparatus 2 hosts virtual machines 2a and 2b and relay unit 2c, whereas the information processing apparatus 3 hosts virtual machines 3a and 3b and relay unit 3c. For example, hypervisors running on the information processing apparatuses 2 and 3 enable these virtual machines and relay units to run on the information processing apparatuses 2 and 3.

The virtual machines 2a, 2b, 3a, and 3b cooperate with each other to provide predetermined services. Assume now that identifiers "V1", "V2", "V3", and V4" are given to the virtual machines 2a, 2b, 3a, and 3b, respectively. The relay units 2c and 3c relay communication data between the virtual machines. Virtual switches, virtual routers, etc. may be used as the relay units 2c and 3c.

In the information processing system according to the first embodiment, communication data between the virtual machines 2a, 2b, 3a, and 3b are collected. Then, the performance of a service (the operating state of each virtual machine) is monitored based on the collected communication data. For example, the overall performance of the service is monitored by analyzing normal and abnormal patterns of requests and responses between the virtual machines on the basis of combinations of the collected communication data. FIG. 1A illustrates an example placement of virtual machines before data is collected for monitoring (before the virtual machines are reallocated).

The information processing apparatus 1 include an allocation determination unit 1a and a control unit 1b.

The allocation determination unit 1a detects one or more pairs of virtual machines communicating with each other from the virtual machines 2a, 2b, 3a, and 3b on the basis of communication data exchanged between the virtual machines 2a, 2b, 3a, and 3b. For example, the allocation determination unit 1a collects, using a mirroring technique, communication data relayed by the relay units 2c and 3c for a predetermined period of time, and detects pairs of virtual machines (in FIG. 1A, represented as communicating pair) from the information on the transmission source and destination addresses of the collected communication data. Alternatively, for example, the allocation determination unit 1a may be designed to acquire, from each of the virtual machines 2a, 2b, 3a, and 3b, information indicating which virtual machine the virtual machine 2a, 2b, 3a, and 3b is communicating with. Since the virtual machines 2a, 2b, 3a, and 3b generate communication data with transmission source and destination addresses, the virtual machines 2a, 2b, 3a, and 3b are able to provide the allocation determination unit 1a with the address information of the transmission source and destination. As a result, the allocation determination unit 1a obtains pairs of virtual machines communicating with each other, for example, pairs (V1, V2), (V2, V3), and (V3, V4).

The allocation determination unit 1a selects one of the information processing apparatuses 2 and 3, and determines how to reallocate the virtual machines 2a, 2b, 3a, and 3b in order that, out of the detected one or more pairs, at least one of paired virtual machines running on a non-selected information processing apparatus runs on the selected information processing apparatus. For example, the allocation determination unit 1a selects the information processing apparatus 2. The allocation determination unit 1a then determines to make a reallocation in order that the virtual machine 3a (V3) out of the paired virtual machines 3a and 3b (V3, V4) running on the non-selected information processing apparatus 3 runs on the selected information processing apparatus 2.

The control unit 1b reallocates the virtual machines 2a, 2b, 3a, and 3b in accordance with the determined reallocation. To reallocate virtual machines, a technique called live migration may be employed. Live migration moves data on virtual machine from one hypervisor to another without causing any downtime to virtual machines. The live migration dynamically moves running virtual machines between information processing apparatuses. FIG. 1B illustrates an example placement of the virtual machines after reallocation. For example, the control unit 1b has moved the virtual machine 3a from the information processing apparatus 3 to the information processing apparatus 2.

The control unit 1b controls the information processing apparatus 2 so as to collect communication data relayed by the relay unit 2c of the information processing apparatus 2 selected by the allocation determination unit 1a. For example, the control unit 1b newly configures a virtual machine for data collection on the information processing apparatus 2, so that the virtual machine for data collection collects, using a mirroring technique, communication data relayed by the relay unit 2c. As a result, all communication data between the pairs (V1, V2), (V2, V3), and (V3, V4) is collected by the virtual machine for data collection.

In this connection, the allocation determination unit 1a and the control unit 1b may be provided in different information processing apparatuses. Alternatively, one or both of the allocation determination unit 1a and the control unit 1b may be provided in the information processing apparatus 2 and 3 (for example, in a virtual machine running on the information processing apparatus 2 and 3).

In the information processing system according to the first embodiment, the allocation determination unit 1a detects pairs of virtual machines communicating with each other from the virtual machines 2a, 2b, 3a, and 3b on the basis of communication data exchanged between the virtual machines 2a, 2b, 3a, and 3b. The allocation determination unit 1a then selects one of the information processing apparatuses 2 and 3, and determines how to reallocate the plurality of virtual machines in order that, out of the detected pairs, at least one of paired virtual machines running on a non-selected information processing apparatus runs on the selected information processing apparatus. The control unit 1b reallocates the virtual machines 2a, 2b, 3a, and 3b in accordance with the determined reallocation. The control unit 1b then controls the selected information processing apparatus so as to collect communication data relayed by the relay unit running on the selected information processing apparatus.

The above technique enables efficient data collection. The following describes a specific example.

Assume, for example, that, as illustrated in FIG. 1A, the virtual machines 2a and 2b run on the information processing apparatus 2, the virtual machines 3a and 3b run on the information processing apparatus 3, and pairs of virtual machines communicating with each other are (V1, V2), (V2, V3), and (V3, V4). In this case, communication data between all of the pairs of virtual machines in the illustrated placement is collected by mirroring as follows. With respect to the pair (V1, V2), communication data relayed by the relay unit 2c is copied and collected. With respect to the pair (V2, V3), communication data relayed by either one of the relay units 2c and 3c is copied and collected. With respect to the pair (V3, V4), communication data relayed by the relay unit 3c is copied and collected.

In this case, it is considered, for example, that a virtual machine for data collection is configured on the information processing apparatus 2 to collect copies of communication data made by the relay units 2c and 3c. To this end, the copies of the communication data made by the relay unit 3c are sent to the relay unit 2c over the network 4. In spite of these copies being used for monitoring, not for original services, the transmission of such copies increases the load on the network 4. That is, using the bandwidth of the network 4 for sending the copies means reducing a bandwidth available for communication for the original services and so on, which results in efficiency losses.

In the information processing system according to the first embodiment, as illustrated in FIG. 1B, data for monitoring is collected after virtual machines are reallocated. More specifically, communication data relayed by the relay unit 2c is collected after one virtual machine 3a of the paired virtual machines 3a and 3b running on the information processing apparatus 3 is moved to the information processing apparatus 2. After the reallocation, communication data between the virtual machines 3a and 3b is relayed by the relay unit 2c. Therefore, collecting only communication data relayed by the relay unit 2c results in collecting the communication data between all pairs. This technique eliminates the necessity of copying and sending communication data over the network 4 during monitoring. This reduces the influence of copying and sending communication data on the network 4, and thus enables efficient data collection.

Which virtual machine is to be moved and to which information processing apparatus the virtual machine is to be moved may be determined under various kinds of constraints. One of considerable methods is to estimate information indicating the load of changing the placement of virtual machines and the load of data collection after the placement change, and determine based on the estimated loads which one of the virtual machines 3a and 3b is to be moved to the information processing apparatus 2. More specifically, the load of changing the placement of virtual machines may be estimated based on the number of virtual machines to be moved in the placement change. In addition, the load of data collection may be estimated based on an amount of communication data to be collected and an amount of setting change for relay units. Then, which virtual machine is to be moved and to which information processing apparatus the virtual machine is moved are determined so that at least one of these kinds of loads is small. This technique enables more efficient data collection.

### (b) Second Embodiment

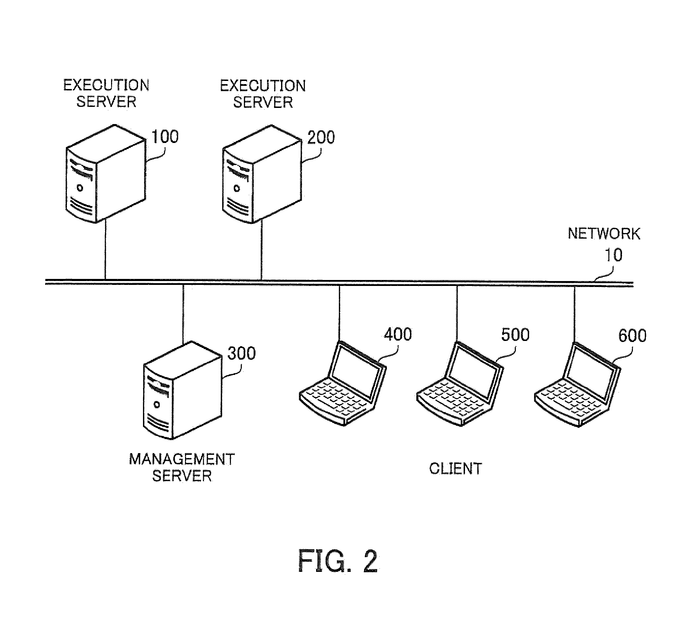

FIG. 2 illustrates an information processing system according to a second embodiment. This information processing system includes execution servers 100 and 200, management server 300, and clients 400, 500, and 600, which are connected to a network 10. The network 10 may be a Local Area Network (LAN), for example. In this connection, the clients 400, 500, and 600 may be connected to the network 10 via a wide-area network such as a Wide Area Network (WAN) or the Internet. In the information processing system of the second embodiment, services provided by the execution servers 100 and 200 are available from the clients 400, 500, and 600. Virtual machines running on the execution servers 100 and 200 cooperate with each other to provide the services.

The second embodiment exemplifies the case where the execution servers 100 and 200 provide a Web service. The Web service is provided by three functions, Web server function, application (AP) server function, and database (DB) server functions cooperating with each other. For example, the Web server function is to provide Graphical User Interface (GUI), etc., the application server function is to provide functions using business-specific logic, and the database server function is to provide functions for managing business-related data.

The execution servers 100 and 200 are server computers that host virtual machines and virtual switches. In this connection, a virtual machine is also referred to as a VM in the following description.

The management server 300 is a server computer that manages the placement of virtual machines running on the execution servers 100 and 200.

The clients 400, 500, and 600 are client computers that access the Web service provided by the execution servers 100 and 200.

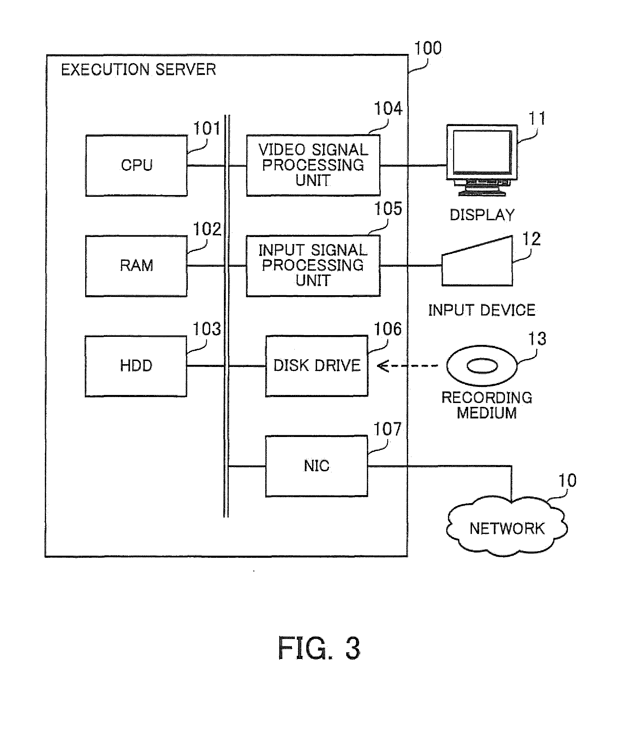

FIG. 3 illustrates example hardware components of an execution server. The execution server 100 includes a CPU 101, RAM 102, Hard Disk Drive (HDD) 103, video signal processing unit 104, an input signal processing unit 105, disk drive 106, and NIC 107, which are connected to an internal bus. The execution server 200, management server 300, and clients 400, 500, and 600 may be configured to have the same hardware components as the execution server 100.

The CPU 101 is a processor for controlling the information processing of the execution server 100. The CPU 101 executes programs by loading part or all of the programs and data from the HDD 103 to the RAM 102. In this connection, a plurality of processors may be provided in the execution server 100 to execute the programs in a distributed manner.

The RAM 102 is a volatile memory that temporarily stores programs and data to be used while the CPU 101 operates. In this connection, another kind of memory, instead of RAN, or a plurality of memories may be provided in the execution server 100.

The HDD 103 is a non-volatile storage device that stores programs such as OS programs and application programs and data. The HDD 103 reads and writes data on an internal magnetic disk under the control of the CPU 101. In this connection, another kind of non-volatile storage device (for example, Solid State Drive (SSD)), instead of HDD, or a plurality of storage devices may be provided in the execution server 100.

The video signal processing unit 104 outputs an image to a display 11 connected to the execution server 100, under the control of the CPU 101. The display 11 may be a Cathode Ray Tube (CRT) display or liquid crystal display.

The input signal processing unit 105 transfers an input signal from an input device 12 connected to the execution server 100 to the CPU 101. The input device 12 may be a pointing device such as a mouse or touch panel, keyboard, or the like, for example.

The disk drive 106 is a driving device for reading programs and data from a recording medium 13. The recording medium 13 may be, for example, a magnetic disk such as Flexible Disk (FD) or HDD, an optical disc such as a Compact Disc (CD) or Digital Versatile Disc (DVD), or a Magneto-Optical disk (MO). The disk drive 106 stores programs and data read from the recording medium 13, in the RAM 102 or HDD 103 under the control of the CPU 101.

The NIC 107 is a communication interface for performing communication with another server over the network 10. The NIC 107 may be a wired communication interface or a wireless communication interface.

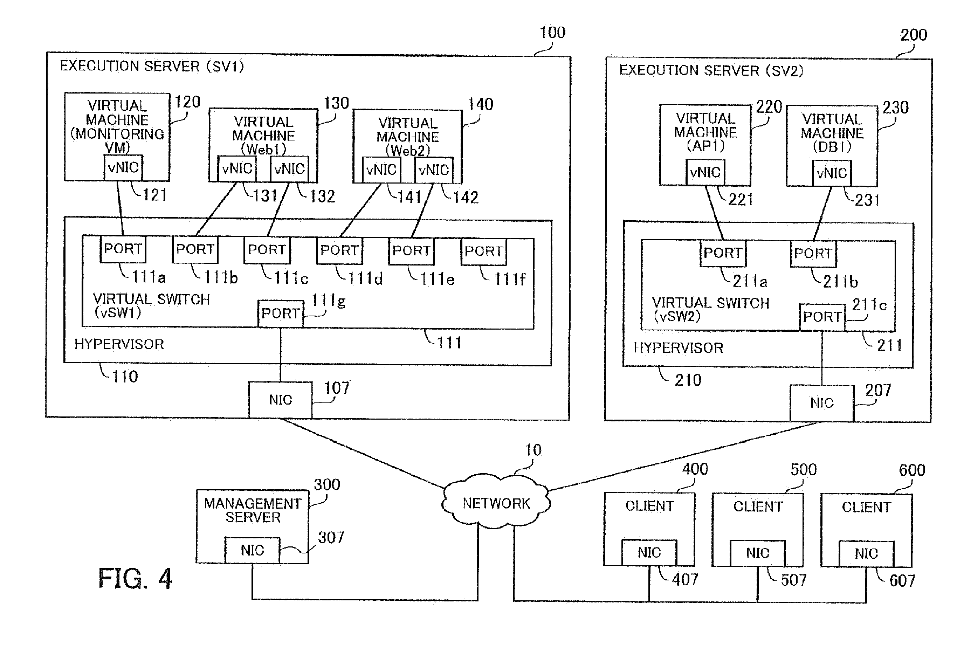

FIG. 4 illustrates an example allocation of virtual machines. The execution server 100 includes a hypervisor 110 and virtual machines 120, 130, and 140.

The hypervisor 110 runs the virtual machines 120, 130, and 140 on the execution server 100. The hypervisor 110 allocates hardware resources to the virtual machines as instructed by the management server 300. The hypervisor 110 also starts and stops the virtual machines as instructed by the management server 300. Further, the hypervisor 110 mediates accesses from each virtual machine to the hardware resources of the execution server 100. Still further, the hypervisor 110 runs a virtual switch 111 on the execution server 100.

The virtual switch 111 relays communication data between virtual machines. The virtual switch 111 is named "vSW1". The virtual switch 111 includes ports 111a, 111b, 111c, 111d, 111e, 111f, and 111g. The port 111a is a virtual communication interface for use in communication of the virtual machine 120. The ports 111b and 111c are virtual communication interfaces for use in communication of the virtual machine 130. The ports 111d and 111e are virtual communication interfaces for use in communication of the virtual machine 140. The port 111f is free. The port 111g is a virtual communication interface for use in communication with the execution server 200, management server 300, and clients 400, 500, and 600 via the NIC 107 and network 10.

The virtual machine 120 monitors the operating state of each virtual machine by collecting communication data relayed by the virtual switch 111 using a mirroring technique. The virtual machine 120 is named "monitoring VM". For example, the virtual switch 111 copies communication data passing through one or more ports other than the port 111a, and outputs the copy from the port 111a. The virtual machine 120 collects the communication data copy, and obtains various information on the other virtual machines from the messages included in the communication data copy. The virtual machine 120 includes a virtual NIC (vNIC) 121 that is a virtual communication interface for performing communication via the port 111a.

The virtual machines 130 and 140 are virtual machines that execute a Web server function. The virtual machines 130 and 140 are named "Web1" and "Web2", respectively.

The virtual machine 130 includes vNICs 131 and 132. The vNIC 131 is a virtual communication interface for performing communication with the clients 400, 500, and 600 via the port 111b. The vNIC 132 is a virtual communication interface for performing communication with the virtual machine 220 via the port 111c.

The virtual machine 140 includes vNICs 141 and 142. The vNIC 141 is a virtual communication interface for performing communication with the clients 400, 500, and 600 via the port 111d. The vNIC 142 is a virtual communication interface for performing communication with the virtual machine 220 via the port 111e.

The execution server 200 includes a hypervisor 210 and virtual machines 220 and 230. Referring to FIG. 4, a physical NIC represented as NIC 207 is provided in the execution server 200.

The hypervisor 210 runs the virtual machines 220 and 230 on the execution server 200. The hypervisor 210 allocates hardware resources to the virtual machines as instructed by the management server 300. The hypervisor 210 also starts and stops the virtual machines as instructed by the management server 300. Further, the hypervisor 210 mediates accesses from each virtual machine to the hardware resources of the execution server 200. Still further, the hypervisor 210 runs a virtual switch 211 on the execution server 200.

The virtual switch 211 relays communication data between virtual machines. The virtual switch 211 is named "vSW2". The virtual switch 211 includes ports 211a, 211b, and 211c. The port 211a is a virtual communication interface for performing communication with the virtual machine 220. The port 211b is a virtual communication interface for performing communication with the virtual machine 230. The port 211c is a virtual communication interface for performing communication via the NIC 207.

The virtual machine 220 is a virtual machine that executes an application server function. The virtual machine 220 is named "AP1". The virtual machine 220 includes a vNIC 221 that is a virtual communication interface for performing communication with the virtual machines 130, 140, and 230 via the port 211a.

The virtual machine 230 is a virtual machine that executes a database server function. The virtual machine 230 is named "DB1". The virtual machine 230 includes a vNIC 231 that is a virtual communication interface for performing communication with the virtual machines 220 via the port 211b.

The management server 300 includes an NIC 307 that is a physical communication interface to be connected to the network 10.

The clients 400, 500, and 600 include NICs 407, 507, and 607, respectively. These NICs 407, 507, and 607 are physical interfaces to be connected to the network 10.

In the following description, the execution servers 100 and 200 are named "SV1" and "SV2", respectively.

The following describes an example of identification information to be assigned to each of physical machines and virtual machines in a network.

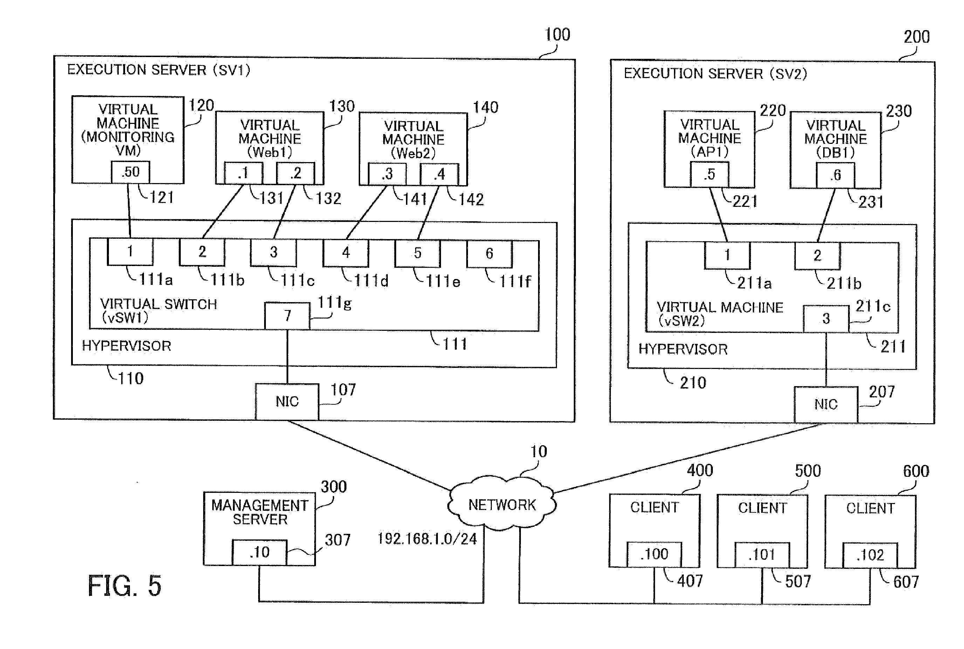

FIG. 5 illustrates the example allocation of virtual machines (continued). In the second embodiment, the virtual machines 120, 130, 140, 220, and 230, management server 300, and clients 400, 500, and 600 belong to the same subnetwork. The network address is "192.168.1.0/24". In FIG. 5, only the host address out of an Internet Protocol (IP) address assigned to each of vNICs and NICs is illustrated, and the network address thereof is not illustrated. The host addresses of the IP addresses assigned to the vNICs and NICs are as follows. The vNICs 121, 131, 132, 141, 142, 221, and 231 are assigned host addresses ".50", ".1", ".2", ".3", ".4", ".5", and ".6", respectively. The NICs 307, 407, 507, and 607 are assigned host addresses ".10", ".100", ".101", and ".102", respectively.

Further, the ports 111a, 111b, 111c, 111d, 111e, 111f, and 111g of the virtual switch 111 are given port numbers "1", "2", "3", "4", "5", "6", and "7", respectively.

Similarly, the ports 211a, 211b, and 211c of the virtual switch 211 are given port numbers "1", "2", and "3", respectively.

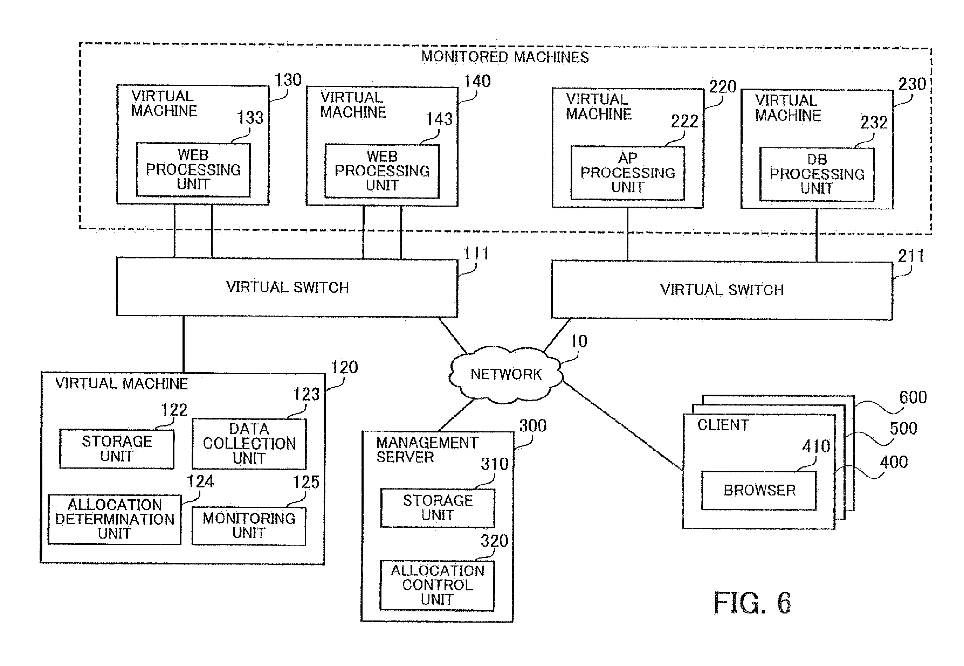

FIG. 6 illustrates example software components according to the second embodiment. Some or all of the units illustrated in FIG. 6 are implemented by program modules executed by the execution servers 100 and 200, management server 300, and clients 400, 500, and 600. In addition, some or all of units illustrated in FIG. 4 are implemented by using a Field Programmable Gate Array (FPGA), Application Specific Integrated Circuit (ASIC), or other electronic circuits. In this connection, the hypervisors 110 and 210 are not illustrated in FIG. 6.

The virtual machine 120 includes a storage unit 122, data collection unit 123, allocation determination unit 124, and monitoring unit 125.

The storage unit 122 stores various data to be used while the allocation determination unit 124 and monitoring unit 125 perform processes. For example, the storage unit 122 stores data for managing available resources of the execution servers 100 and 200, and data for managing resources allocated to each virtual machine. The information for managing these resources is acquired from the management server 300. In addition, the storage unit 122 stores communication data which were exchanged between virtual machines and collected by the data collection unit 123. The storage unit 122 also stores data obtained by analyzing the communication data by the allocation determination unit 124.

The data collection unit 123 collects communication data relayed by the virtual switch 111 in accordance with instructions from the allocation determination unit 124 and monitoring unit 125. For example, to collect communication data that passes through the port 111b, the data collection unit 123 causes the virtual switch 111 to copy the communication data passing through the port 111b and output the copy from the port 111a. This allows the data collection unit 123 to collect the communication data copy. This technique may be called port mirroring (hereinafter, referred to as mirroring). In addition, a technique of collecting communication data such as an ETHERNET (registered trademark) frame using a mirroring technique and analyzing an IP packet included in the frame may be called packet capture. Hereinafter, collecting communication data is called "capture," simply.

Further, the data collection unit 123 causes the virtual switch 211 to copy communication data relayed by the virtual switch 211, and collects the copy over the network 10. For example, communication data passing through each port is collected by mirroring the ports in sequence. In addition, by designing the virtual switches 111 and 211 to append information identifying a port to communication data, it becomes possible to mirror all of desired ports at the same time. The data collection unit 123 then stores thus collected communication data in the storage unit 122 in association with the ports of the virtual switches 111 and 211.

The allocation determination unit 124 determines how to reallocate the virtual machines before the monitoring unit 125 starts to monitor the virtual machines 130, 140, 220, and 230. For example, the allocation determination unit 124 causes the data collection unit 123 to collect communication data relayed by the virtual switches 111 and 211 for a predetermined period of time, and determines how to reallocate the virtual machines based on the collected communication data. The allocation determination unit 124 notifies the management server 300 of the determined reallocation to make a request for reallocating the virtual machines.

The monitoring unit 125 monitors the operating states of the virtual machines 130, 140, 220, and 230. More specifically, after the virtual machines 130, 140, 220, and 230 are reallocated by the management server 300, the monitoring unit 125 causes the data collection unit 123 to collect communication data between the virtual machines 130, 140, 220, and 230. For example, the monitoring unit 125 monitors the overall performance of the Web service by combining the communication data collected by the data collection unit 123 (communication data exchanged between the Web server function, application server function, and database server function).

The virtual machines 130 and 140 include Web processing units 133 and 143, respectively, which execute the Web server function. For example, in response to requests from a browser 410 on the client 400, the Web processing units 133 and 143 request an application processing unit 222 executed by the virtual machine 220 to perform intended processes. Then, when receiving the results of performing the processes from the application processing unit 222, the Web processing units 133 and 143 return the results to the browser 410.

The virtual machine 220 includes the application processing unit 222 that executes an application server function. For example, in response to requests from the Web processing units 133 and 143, the application processing unit 222 acquires data from a database processing unit 232 executed by the virtual machine 230, and performs intended processes. The application processing unit 222 then returns the results of performing the processes to the requesting Web processing units 133 and 143.

The virtual machine 230 includes the database processing unit 232 that executes a database server function. For example, in response to a request from the application processing unit 222, the database processing unit 232 accesses a database stored in the execution server 200 or another device in order to process data, such as registration, update, deletion, etc. The database processing unit 232 then returns the result of accessing the database to the application processing unit 222.

The management server 300 includes a storage unit 310 and allocation control unit 320.

The storage unit 310 stores information for managing available resources of the execution servers 100 and 200. The storage unit 310 also stores information for managing resources allocated to each virtual machine. In response to a request from the virtual machine 120, the stored information is provided from the allocation control unit 320 to the virtual machine 120.

When receiving a request for reallocating virtual machines from the allocation determination unit 124, the allocation control unit 320 reallocates the virtual machines according to the received request. In this reallocation, the placement of virtual machines on the execution servers 100 and 200 is changed. For example, the allocation control unit 320 reallocates virtual machines with a technique called live migration.

The client 400 includes the browser 410 that is a Web browser for making Web access to the Web processing units 133 and 143. Similarly, the clients 500 and 600 have browsers.

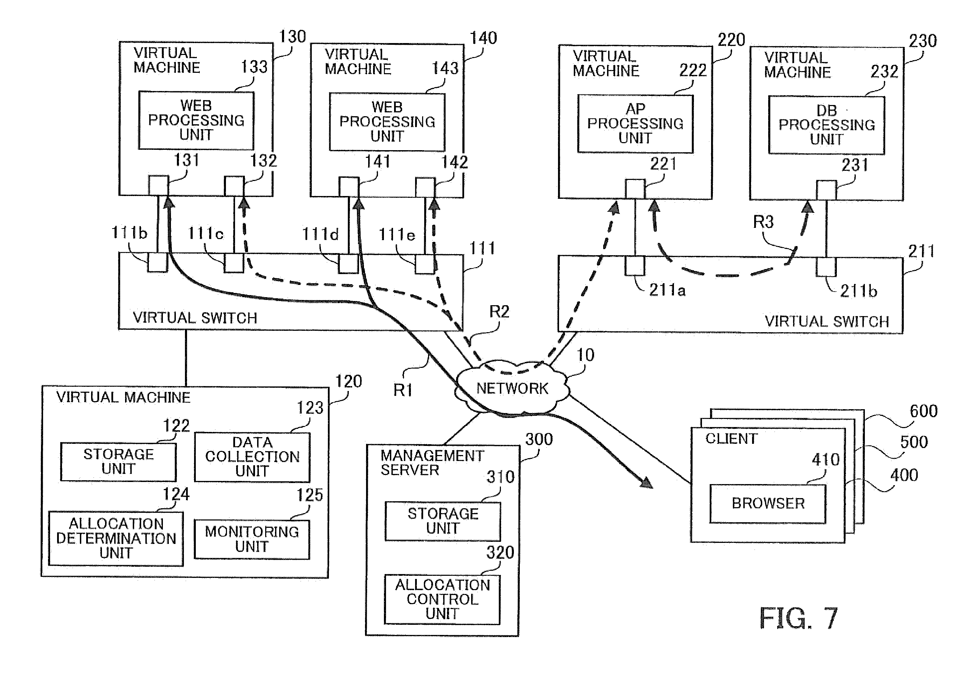

FIG. 7 illustrate an example of communication routes. There are following communication routes for the Web service provided by the virtual machines 130, 140, 220, and 230. A communication route R1 is used between the browser 410 and the Web processing units 133 and 143. The communication route R1 includes a route connecting the client 400 and the virtual machine 130 via the network 10 and port 111b, and a route connecting the client 400 and the virtual machine 140 via the network 10 and port 111d. Similarly to the client 400, the clients 500 and 600 are able to use this communication route R1 to communicate with the virtual machine 130 and 140.

A communication route R2 is used between the Web processing units 133 and 143 and the application processing unit 222. The communication route R2 includes a route connecting the virtual machines 130 and 220 via the port 111c, network 10, and port 211a, and a route connecting the virtual machines 140 and 220 via the port 111e, network 10, and port 211a.

A communication route R3 is used between the application processing unit 222 and the database processing unit 232. The communication route R3 connects the virtual machines 220 and 230 via the ports 211a and 211b.

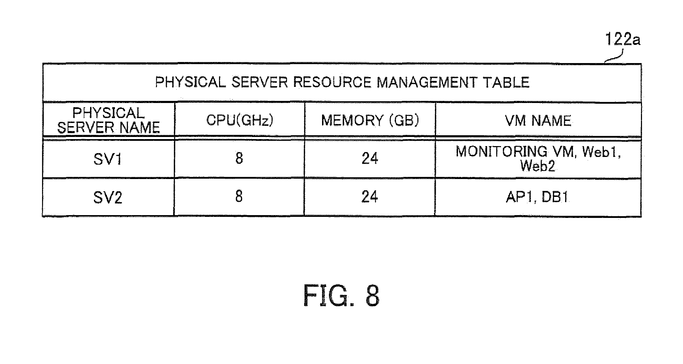

FIG. 8 illustrates an example of a physical server resource management table. A physical server resource management table 122a is stored in the storage unit 122. For example, the allocation determination unit 124 acquires information for the physical server resource management table 122a from the management server 300, and stores the information in the storage unit 122. The physical server resource management table 122a contains columns for physical server name, CPU (gigahertz (GHz)), memory (gigabyte (GB)), and VM name.

The physical server name column contains the machine name of an execution server. The CPU (GHz) column contains information indicating all available CPU resources (a total amount of allocated and free resources) of the execution server. The memory (GB) column contains information indicating all available memory (RAM) resources (a total amount of allocated and free resources) of the execution server. The VM name column contains the machine names of virtual machines currently running on the execution server.

For example, the physical server resource management table 122a has a record with "SV1" in the physical server name column, "8" in the CPU (GHz) column, "24" in the memory (GB) column, and "monitoring VM, Web1, Web2" in the VM name column.

This record indicates that, in the execution server 100, a CPU resource of 8GHz and a memory resource of 24GB are available for virtual machines. The record also indicates that the virtual machines 120, 130, and 140 are currently running on the execution server 100.

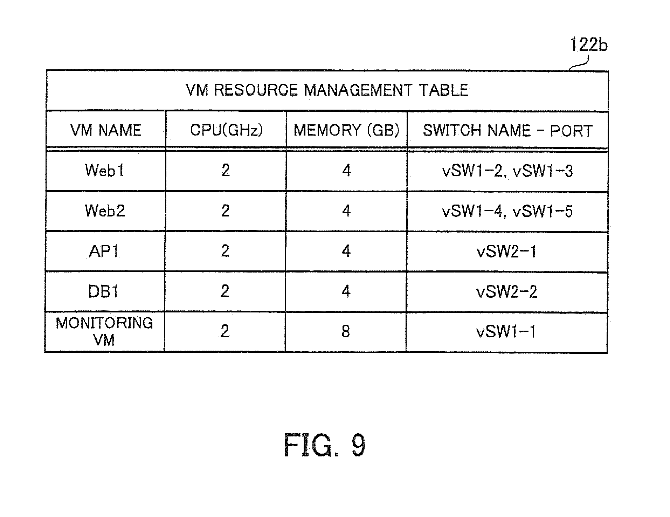

FIG. 9 illustrates an example of a VM resource management table. A VM resource management table 122b is stored in the storage unit 122. For example, the allocation determination unit 124 acquires information for the VM resource management table 122b from the management server 300, and stores the information in the storage unit 122. The VM resource management table 122b includes columns for VM name, CPU (GHz), memory (GB), and switch name-port.

The VN name column contains the machine name of a virtual machine. The CPU (GHz) column contains information indicating a CPU resource needed for running the virtual machine. The memory (GB) column contains information indicating a memory resource needed for running the virtual machine. The switch name-port column contains combinations of switch name and port number that are currently used by the virtual machine for communication.

For example, the VM resource management table 122b has a record with "Web1" in the VM name column, "2" in the CPU (GHz) column, "4" in the memory (GB) column, and "vSW1-2, vSW1-3" in the switch name-port column.

This record indicates that a CPU resource of 2 GHz and a memory resource of 4 GB are needed for running the virtual machine 130. The record also indicates that the virtual machine 130 performs communication using the ports 111b and 111c of the virtual switch 111.

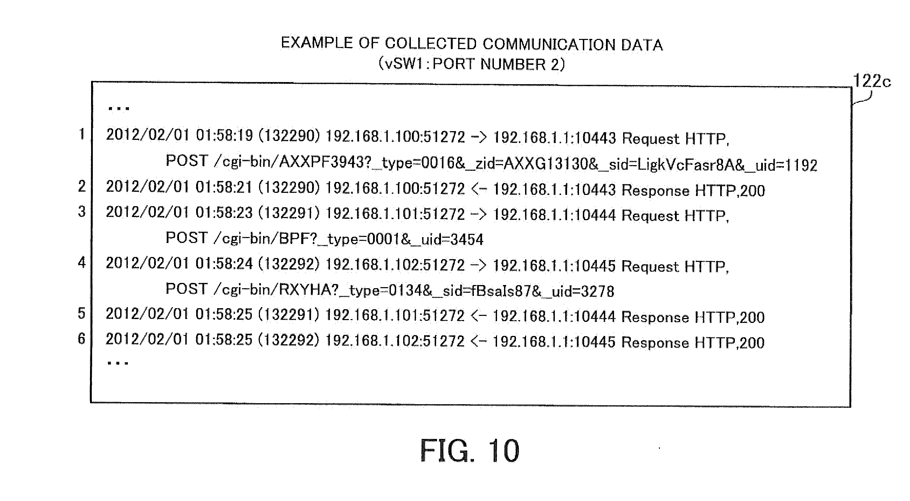

FIG. 10 illustrates an example of collected communication data. A communication data group 122c is a set of communication data collected by the data collection unit 123 with respect to the port 111b. The communication data group 122c is stored in the storage unit 122. As described above, the port 111b is used for Web accesses between the browsers on the clients 400, 500, and 600 and the Web processing unit 133. Therefore, the communication data that passes through the port 111b may include a message relating to a Web access. The following describes a specific example with row numbers given to respective rows of the communication data group 122c.

For example, communication data with row number of "1" indicates a HyperText Transfer Protocol (HTTP) request sent from the client 400 (IP address "192.168.1.100") to the virtual machine 130 (IP address "192.168.1.1").

Communication data with row number of "2" indicates an HTTP response sent from the virtual machine 130 to the client 400 in response to the HTTP request of row number "1".

Communication data with row number of "3" indicates an HTTP request sent from the client 500 (IP address "192.168.1.101") to the virtual machine 130.

Communication data with row number of "4" indicates an HTTP request sent from the client 600 (IP address "192.168.1.102") to the virtual machine 130.

Communication data with row number of "5" indicates an HTTP response sent from the virtual machine 130 to the client 500 in response to the HTTP request of row number "3".

Communication data with row number of "6" indicates an HTTP response sent from the virtual machine 130 to the client 600 in response to the HTTP request of row number "4".

The data collection unit 123 collects communication data that passes through each port by collecting the data at ports in sequence. The above explanation uses the port 111b by way of example. Communication data that passes through the ports 111c, 111d, 111e, 211a, and 211b are collected in the same way. For example, for communication between the Web processing unit 133 and the application processing unit 222, communication data including Web-application cooperation messages (for example, Internet Inter Object Request Broker Protocol (IIOP), etc.) is collected. For communication between the application processing unit 222 and the database processing unit 232, on the other hand, communication data including database access messages is collected. Each piece of communication data includes a transmission source IP address and a transmission destination IP address. In this connection, by appending information indicating a port to a copy of communication data made by the virtual switches 111 and 211, it becomes possible to collect communication data that passes through a plurality of desired ports at the same time.

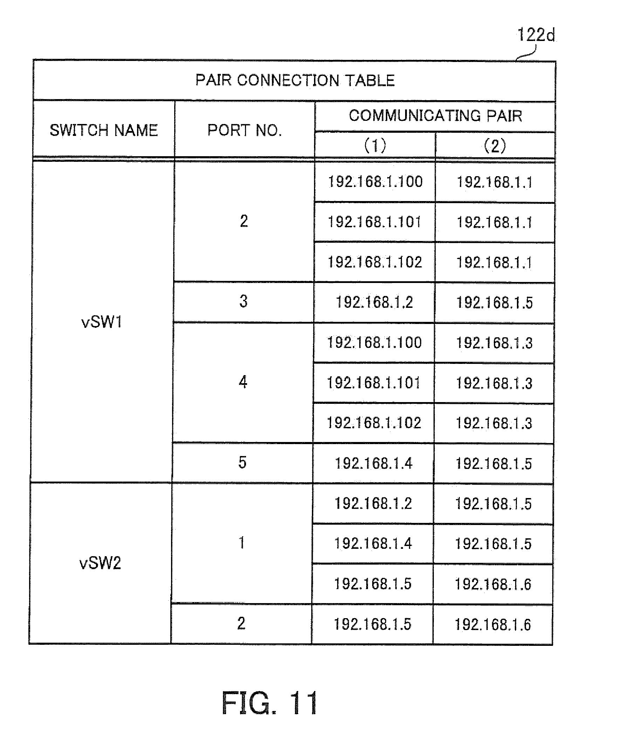

FIG. 11 illustrates an example of a pair connection table. A pair connection table 122d is created by the allocation determination unit 124, and is stored in the storage unit 122. The allocation determination unit 124 creates the pair connection table 122d based on communication data that is collected by the data collection unit 123 for a predetermined period of time. The pair connection table 122d includes columns for switch name, port number (No.), and communicating pair.

The switch name column contains the name of a switch. The port number column contains a port number. The communicating pair column contains a pair of the IP addresses of transmission source and destination in communication (hereinafter, may be referred to as communicating pair). IP addresses are uniquely assigned to the virtual machines 130, 140, 220, and 230 (a plurality of IP addresses may be assigned to one virtual machine). Therefore, a pair of IP addresses indicates a pair of virtual machines communicating with each other. In this connection, the communicating pair column includes a column (1) for containing a first IF address and a column (2) for containing a second IP address paired with the first IP address.

For example, the pair connection table 122d includes a record with "vSW1" in the switch name column, "2" in the port number column, and "192.168.1.100" in the column (1) and "192.168.1.1" in the column (2) in the communicating pair columns. This record indicates that the port 111b of the virtual switch 211 is used for communication between a pair of IP addresses "192.168.1.100" (client 400) and "192.168.1.1" (virtual machine 130), which are transmission source and destination. In this connection, this single record represents both cases where the transmission source and destination are "192.168.1.100" and "192.168.1.1", respectively, and where the transmission source and destination are "192.168.1.1" and "192.168.1.100", respectively. More specifically, the record corresponds to communication indicated by row numbers "1" and "2" of the communication data group 122c. If one of these cases is detected, this record is registered in the pair connection table 122d. In addition, a plurality of communicating pairs may be registered with respect to one port. For example, three communicating pairs are registered with respect to the port number "2" of the switch name "vSW1".

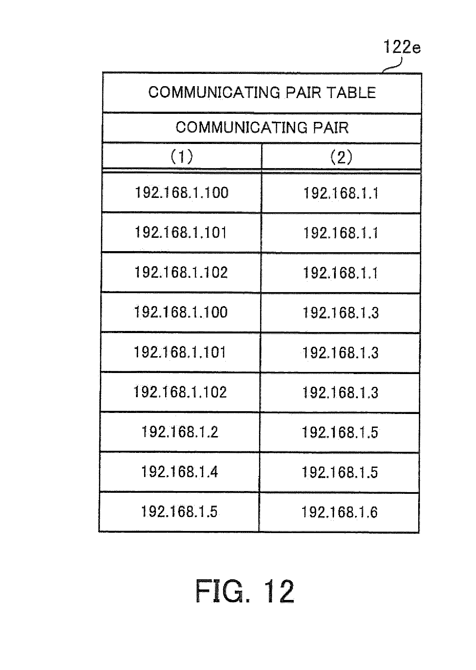

FIG. 12 illustrates an example of a communicating pair table. A communicating pair table 122e is created by the allocation determination unit 124, and is stored in the storage unit 122. The allocation determination unit 124 creates the communicating pair table 122e based on the pair connection table 122d. The communicating pair table 122e includes a column for communicating pair.

The communicating pair column contains a pair of the IP addresses of transmission source and destination in communication. The communicating pair column includes a column (1) for containing a first IP address and a column (2) for containing a second IP address paired with the first IP address.

The communicating pair table 122e contains all different communicating pairs extracted from the pair connection table 122d. That is, collecting communication data between all of the communicating pairs registered in the communicating pair table 122e amounts to collecting communication data between all communicating pairs of the monitored virtual machines 130, 140, 220, and 230. Therefore, a set of ports that cover communication data between all of the communicating pairs registered in the communicating pair table 122e is taken as a captured object candidate.

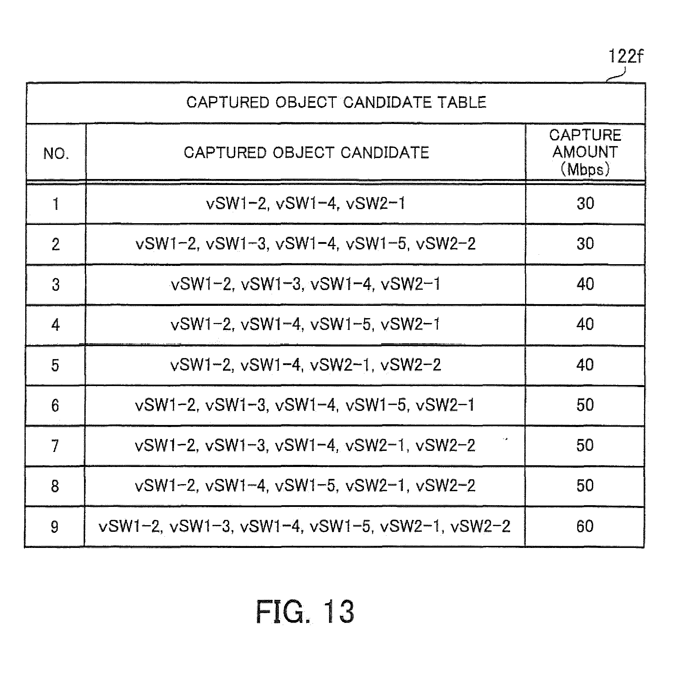

FIG. 13 illustrates an example of a captured object candidate table. A captured object candidate table 122f is created by the allocation determination unit 124, and is stored in the storage unit 122. The allocation determination unit 124 creates the captured object candidate table 122f based on the pair connection table 122d and communicating pair table 122e. The captured object candidate table 122f includes columns for record number (No.), captured object candidate, and capture amount (megabits per second (Mbps)).

The record number column contains information identifying a record. The captured object candidate column contains information indicating a set of ports determined as a captured object candidate. Each port is represented in the form of "switch name-port number". The capture amount (Mbps) column contains an amount of collected data (hereinafter, may be referred to as a capture amount) that is expected in the case of capture with respect to the captured object candidate.

For example, the captured object candidate table 122f has a record with "1" in the record number column, "vSW1-2, vSW1-4, vSW2-1" in the captured object candidate column, and "30" in the capture amount (Mbps) column.

This record with record number of "1" indicates that a set of ports 111b, 111d, and 211a is a captured object candidate, and that 30 Mbps data is expected to be captured if data is collected with respect to these ports 111b, 111d, and 211a.

In this connection, various methods may be considered to expect a capture amount. For example, the data collection unit 123 calculates an average amount of data collected at each port per second, and supplies the calculation result to the allocation determination unit 124. Alternatively, the allocation determination unit 124 may obtain an amount of data communicated via each port per second from the virtual switches 111 and 211 using Simple Network Management Protocol (SNMP). Then, the allocation determination unit 124 registers a total amount of data communicated per second via the ports included in the captured object candidate, in the capture amount (Mbps) column.

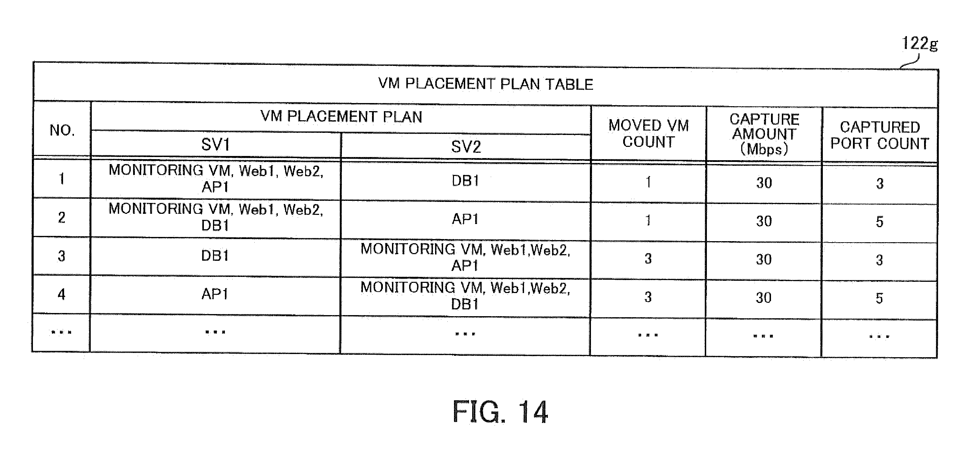

FIG. 14 illustrates an example of a VM placement plan table. A VM placement plan table 122g is created by the allocation determination unit 124, and is stored in the storage unit 122. The allocation determination unit 124 creates the VM placement plan table 122g based on the physical server resource management table 122a, VM resource management table 122b, and captured object candidate table 122f. The VM placement plan table 122g includes columns for record number (No.), VM placement plan, moved VM count, capture amount (Mbps), and captured port count.

The record number column contains information identifying a record. The VM placement plan column contains information indicating a placement plan of virtual machines on each execution server. The VM placement plan column further includes columns for SV1 and SV2. The SV1 column contains the machine names of virtual machines to be placed on the execution server 100. The SV2 column contains the machine names of virtual machines to be placed on the execution server 200. The moved VM count column contains a total number of virtual machines to be reallocated (to be moved) in order to change the current placement to one indicated in the VM placement plan column. For the total number of virtual machines to be moved, only virtual machines relating to the Web service are considered (movement of the monitoring virtual machine 120 is not considered). This is because the monitoring virtual machine 120 may newly be configured on a destination of movement without being moved. However, in the case where the monitoring virtual machine 120 is moved, this movement may be added. The capture amount

(Mbps) column contains a capture amount that is expected in the case where the current placement is changed to one indicated in the VM placement plan column. The captured port count column contains the number of ports to be captured in the case where the current placement is changed to one indicated in the VM placement plan column. Here, the number of ports to be captured is the minimum number of ports in one virtual switch that are to be captured by the virtual machine 120 for monitoring all communicating pairs after the placement change.

For example, the VM placement plan table 122g includes a record with "1" in the record number column, "monitoring VM, Web1, Web2, AP1" in the VM placement plan column for the execution server 100, "DB1" in the VM placement plan column for the execution server 200, "1" in the moved VM count column, "30" in the capture amount (Mbps) column, and "3" in the captured port count column.

This record indicates that, in the case where the reallocation is made to place the virtual machines 120, 130, 140, and 220 on the execution server 100 and to place the virtual machine 230 on the execution server 200, the number of movements of virtual machines is one. This value of one is based on the movement of the virtual machine 220 from the execution server 200 to the execution server 100 (the number of movements is one). In addition, the record indicates that 30 Mbps data is expected to be captured after this reallocation, and the number of ports from which the data is captured is three. This value of three indicates that, out of the ports of the virtual switch 11 after the reallocation, there are the following three ports to capture data from, in order to cover communications between all pairs registered in the communicating pair table 122e. The first is two ports 111b and 111d used for communication between the virtual machines 130 and 140 and the clients 400, 500, and 600. The second is one port used for communication between the virtual machine 220 and the virtual machines 130, 140, and 230. Therefore, the captured port count is calculated as 2+1=3. In this connection, the capture amount is a total of capture amount with respect to the captured ports.

As another example, the VM placement plan table 122g includes a record with "2" in the record number column, "monitoring VM, Web1, Web2, DB1" in the VM placement plan column for the execution server 100, "AP1" in the VM placement plan column for the execution server 200, "1" in the moved VM count column, "30" in the capture amount (Mbps) column, and "5" in the captured port count column.

The contents of the registered information are the same as record number "1". The value of five in the captured port count column indicates that, out of the ports of the virtual switch 11 after the reallocation, there are the following five ports to capture data from, in order to cover communications between all pairs registered in the communicating pair table 122e. The first is two ports 111b and 111d used for communication between the virtual machines 130 and 140 and the clients 400, 500, and 600. The second is two ports 111c and 111e used for communication between the virtual machines 130 and 140 and the virtual machine 220. The third is one port used for communication between the virtual machine 230 and the virtual machine 220. Therefore, the captured port count is calculated as 2+2+1=5.

In this connection, as described above, for the number of VMs to be moved, the movement of the monitoring virtual machine 120 is not considered. Therefore, the record with record number "3" indicates the case where reallocation is made to place the virtual machine 230 on the execution server 100 and to place the virtual machines 120, 130, 140 and 220 on the execution server 200, and the moved VM count is three. This value of three is based on the movement of the virtual machine 230 from the execution server 200 to the execution server 100 (the number of movements is one), and the movements of the virtual machines 130 and 140 from the execution server 100 to the execution server 200 (the number of movements is two) (a total number of movements is 1+2=3). In this connection, in the case where the virtual machine 120 is moved from the execution server 100 to the execution server 200, the moved VM count may be calculated as "four" by adding this movement (the number of movements is 1) (a total number of movements is 3+1=4).

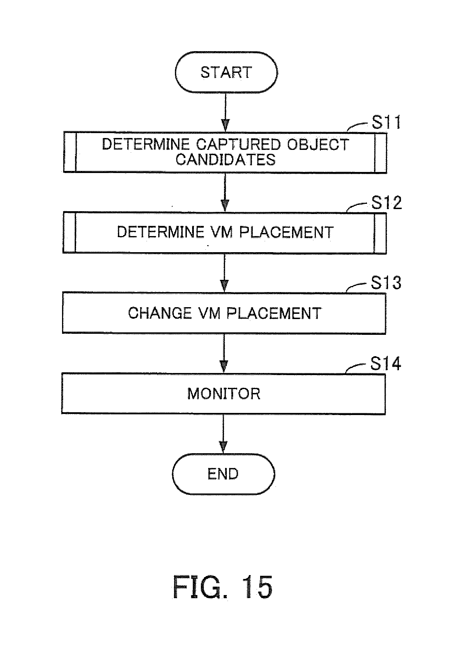

FIG. 15 is a flowchart illustrating an example of a data collection process. The process illustrated in FIG. 15 will be described step by step.

At step S11, the allocation determination unit 124 is notified that virtual machines 130, 140, 220, and 230 are to be monitored. For example, an administrator of the information processing system specifies the machine names of virtual machines to be monitored. The allocation determination unit 124 then determines captured object candidates based on communication data collected by the data collection unit 123, and records the candidates in the captured object candidate table 122f stored in the storage unit 122, which will be described in detail later.

At step S12, the allocation determination unit 124 determines VM placement plans with reference to the captured object candidate table 122f, and registers the VM placement plans in the VM placement plan table 122g stored in the storage unit 122. The allocation determination unit 124 then determines a VM placement for monitoring with reference to the VM placement plan table 122g.

At step S13, the allocation determination unit 124 requests the allocation control unit 320 to change the placement of the virtual machines in accordance with the determined VM placement. The allocation control unit 320 changes the placement of the virtual machines in accordance with the determined VM placement.

At step S14, after the placement change is completed, the allocation control unit 320 causes the virtual machine 120 (monitoring VM) to start monitoring the monitored virtual machines 130, 140, 220, and 230. For example, when the virtual machine 120 is placed on the execution server 100, the data collection unit 123 collects communication data obtained by the virtual switch 111 performing mirroring. In addition, for example, the virtual machine 120 may be moved to the execution server 200 (or newly configured) in the placement change. In this case, the data collection unit 123 collects the communication data obtained by the virtual switch 211 performing mirroring. In either case, the monitoring unit 125 monitors the overall performance of the service by combining the communication data collected by the data collection unit 123.

As described above, the data collection for monitoring is started after the virtual machines are reallocated. The following describes a specific procedure of the above step S11.

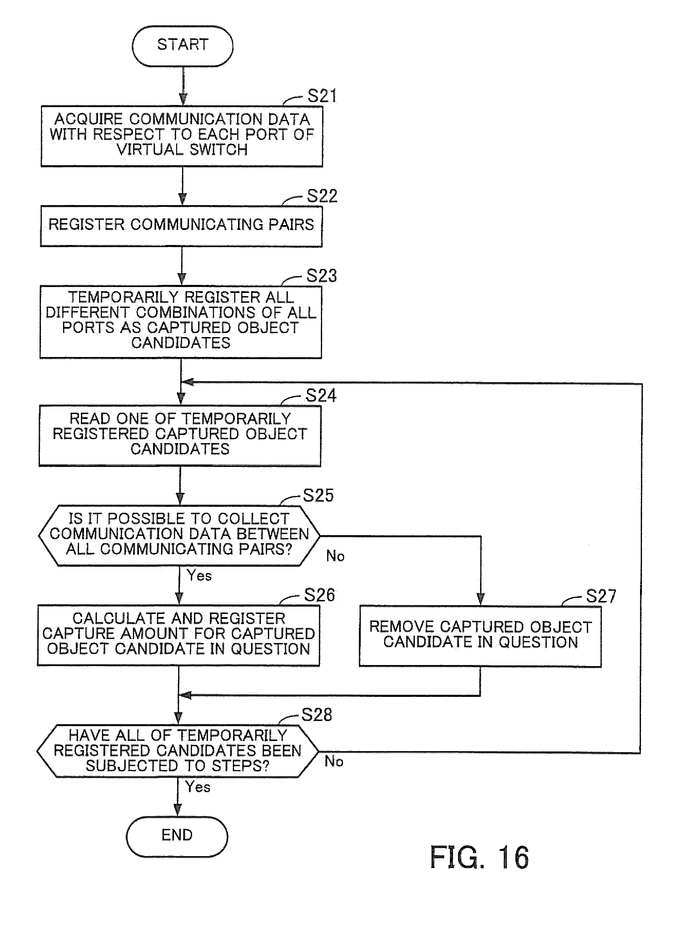

FIG. 16 is a flowchart illustrating an example of how to determine captured object candidates. The process of FIG. 16 will be described step by step.

At step S21, the allocation determination unit 124 causes the data collection unit 123 to collect communication data that passes through each port of the virtual switches 111 and 211 for a predetermined period of time. For example, the allocation determination unit 124 is able to specify, with reference to the VM resource management table 122b stored in the storage unit 122, which virtual switches and which ports of the virtual switches the monitored virtual machines 130, 140, 220, and 230 use to perform communication. The data collection unit 123 then causes the virtual switches 111 and 211 to mirror the specified ports 111b, 111c, 111d, 111e, 211a, and 211b. The data collection unit 123 is able to collect communication data with respect to each port by mirroring the ports in sequence. For example, the data collection unit 123 collects the communication data group 122c with respect to the port 111b. The data collection unit 123 then stores the collected communication data in association with the ports of the virtual switch in the storage unit 122.

At step S22, the allocation determination unit 124 detects communicating pairs on the basis of the communication data stored in the storage unit 122. The allocation determination unit 124 registers the communicating pairs in the pair connection table 122d stored in the storage unit 122. Further, the allocation determination unit 124 creates the communicating pair table 122e with reference to the pair connection table 122d, and stores the table in the storage unit 122.

At step S23, the allocation determination unit 124 temporarily registers all different combinations of all ports included in the pair connection table 122d, as captured object candidates in the captured object candidate table 122f. For example, 57 different combinations are obtained from six different ports 111b, 112c, 111d, 111e, 211a, and 211b. The allocation determination unit 124 temporarily registers all of the combinations in the captured object candidate table 122f.

At step S24, the allocation determination unit 124 reads one of the captured object candidates temporarily registered in the captured object candidate table 122f. Here, the allocation determination unit 124 reads a captured object candidate whose capture amount has not been registered.

At step S25, the allocation determination unit 124 determines whether or not it is possible to collect communication data between all communicating pairs registered in the communicating pair table 122e by capturing a set of the ports included in the captured object candidate in question. In the case where it is possible to collect the communication data between all communicating pairs, the process proceeds to step S26. Otherwise, the process proceeds to step S27. For example, the allocation determination unit 124 recognizes the communicating pairs covered by each port with reference to the pair connection table 122d. For example, in the case where all communicating pairs registered in the communicating pair table 122e are included in a combination of the communicating pairs covered by the captured object candidate in question, it is recognized that it is possible to collect the communication data between all communicating pairs. If all communicating pairs registered in the communicating pair table 122e are not included in the combination of the communicating pairs covered by the captured object candidate in question, on the contrary, it is recognized that it is not possible to collect the communication data between all communicating pairs.

At step S26, the allocation determination unit 124 calculates a capture amount that is expected in the case of capture with respect to the captured object candidate in question, and registers the capture amount in the captured object candidate table 122f. Then, the process proceeds to step S28. For example, the allocation determination unit 124 causes the data collection unit 123 to measure an amount of data communicated via each port of the captured object candidate, and calculates a total amount of communication data with respect to the ports as the capture amount of the captured object candidate. Alternatively, the allocation determination unit 124 may calculate a capture amount by obtaining an amount of data communicated via each port of the captured object candidate from the virtual switches 111 and 211 using the SNMP, and calculating a total amount of communication data with respect to the ports as the capture amount.

At step S27, the allocation determination unit 124 removes the captured object candidate in question from the captured object candidate table 122f. Then, the process proceeds to step S28.

At step S28, the allocation determination unit 124 determines whether all captured object candidates temporarily registered in the captured object candidate table 122f have been subjected to step S24 and subsequent steps. If all captured object candidates have been subjected to these steps, the process is completed. Otherwise, the process goes back to step S24. For example, if a capture amount has been registered for each captured object candidate registered in the captured object candidate table 122f, the allocation determination unit 124 determines that all candidates have been subjected to the steps. If there are captured object candidates whose capture amounts have not been registered in the captured object candidate table 122f, the allocation determination unit 124 determines that there are some candidates remaining.

As described above, the virtual machine 120 registers the captured object candidates in the captured object candidate table 122f.

In this connection, at the above step S21, the allocation determination unit 124 causes the data collection unit 123 to collect data with respect to the ports 111b, 111c, 111d, 111e, 211a, and 211b directly used by the monitored virtual machines 130, 140, 200, and 230, and not to collect data with respect to the other ports (for example, ports 111g, 111f, 211c). Communication data that passes through the other ports is unlikely to relate to the monitored service, and just increases a capture amount (that is, the data is probably excluded through narrowing-down processes described later). However, the allocation determination unit 124 may cause the data collection unit 123 to collect data with respect to these ports as well.

Further, at step S21, the allocation determination unit 124 may be designed to acquire, from each of the virtual machines 130, 140, 220, and 230, information indicating which virtual machine the virtual machine is communicating with. Since the virtual machines 130, 140, 220, and 230 generate communication data with transmission source and destination addresses, the virtual machines 130, 140, 220, and 230 are able to provide the allocation determination unit 124 with the address information of the transmission source and destination.

The following describes a specific procedure of step S12 of FIG. 15.

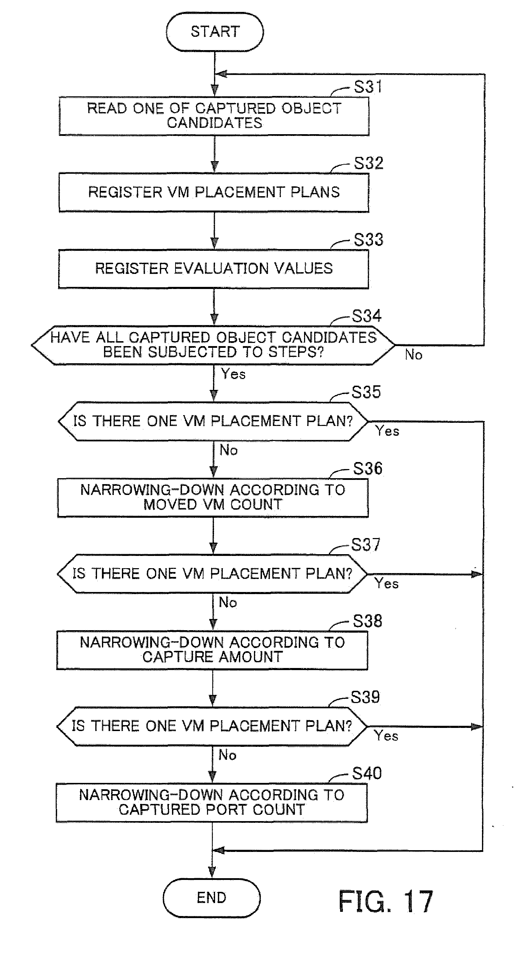

FIG. 17 is a flowchart illustrating an example of how to determine a placement of virtual machines. The process of FIG. 17 will be described step by step.

At step S31, the allocation determination unit 124 reads one of the captured object candidates from the captured object candidate table 122f stored in the storage unit 122.

At step S32, the allocation determination unit 124 selects one execution server for running a monitoring VM, and generates VM placement plans in order that the virtual machines that perform communication using the ports included in the captured object candidate in question run on the selected execution server. At this time, the allocation determination unit 124 takes the utilization of resources in the execution servers into account. The utilization of resources is confirmed with reference to the physical server resource management table 122a and VM resource management table 122b stored in the storage unit 122. In addition, the VM placement plans are generated in order that the virtual machines 130 and 140 that perform communication with the external clients 400, 500, and 600 other than the virtual machines 140, 220, and 230 and the monitoring VM run on the same execution server. This is because the communication data exchanged with the clients 400, 500, and 600 is not sent to an execution server other than the execution server where the virtual machines 130 and 140 run. The allocation determination unit 124 registers the generated VM placement plans in the VM placement plan table 122g stored in the storage unit 122. A specific method for determining VM placement plans will be described later.

At step S33, the allocation determination unit 124 registers various evaluation values (moved VM count, capture amount, and captured port count) with respect to each VN placement plan registered in the VM placement plan table 122g. The moved VM count is obtained by detecting how many virtual machines need to be moved to change the current placement of virtual machines to the one indicated by the VM placement plan. In this connection, it is considered that a virtual machine which runs on the same execution server before and after the placement change does not need to be moved. The captured port count is the number of ports included in the captured object candidate in question. The capture amount is a capture amount corresponding to the captured object candidate.

At step S34, the allocation determination unit 124 determines whether all captured object candidates registered in the captured object candidate table 122f have been subjected to steps S31 to S33. If all captured object candidates have been subjected to these steps, the process proceeds to step S35. Otherwise, the process goes back to step S31. For example, a flag indicating completion may be given to a captured object candidate that has been subjected to the steps, which allows the determination of this step S34 to be made based on the flag.

At step S35, the allocation determination unit 124 determines whether the VM placement plan table 112a contains one VM placement plan. If there is one VM placement plan, this VM placement plan is determined as a VM placement for monitoring, and then the process is completed. If there are some VM placement plans, then the process proceeds to step S36.

At step S36, the allocation determination unit 124 narrows down the VM placement plans according to the moved VM count with reference to the VM placement plan table 112g. More specifically, the allocation determination unit 124 extracts VM placement plans with the minimum moved VM count.

At step S37, the allocation determination unit 124 determines whether the narrowing-down of step S36 results in one VM placement plan remaining. If one VM placement plan remains, this VM placement plan is determined as a VM placement for monitoring, and then the process is completed. If there are some VM placement plans remaining, the process proceeds to step S36.

At step S38, the allocation determination unit 124 further narrows down the result of step S36 according to the capture amount with reference to the VM placement plan table 112g. More specifically, the allocation determination unit 124 extracts VM placement plans with the minimum capture amount.

At step S39, the allocation determination unit 124 determines whether the narrowing-down of step S38 results in one VM placement plan remaining. If there is one VM placement plan remaining, this VM placement plan is determined as a VM placement plan for monitoring, and then the process is completed. If there are some VM placement plans remaining, the process proceeds to step S40.

At step S40, the allocation determination unit 124 narrows down the result of step S38 according to the captured port count with reference to the VM placement plan table 112g. More specifically, the allocation determination unit 124 extracts VM placement plans with the minimum captured port count.

As described above, the allocation determination unit 124 determines a VM placement for monitoring by narrowing down VM placement plans. In this connection, there may still be some VM placement plans remaining after the narrowing-down of step S40. In this case, the allocation determination unit 124 may let a system administrator select which VM placement plan is to be adopted.

The narrowing-down of steps S36 to S40 is performed for the following reasons.

The narrowing-down according to the moved VM count is performed because a fewer number of movements reduces the load on the execution servers for the movements, thereby making it possible to complete the movements and start monitoring swiftly.

The narrowing-down according to the capture amount is performed because a less capture amount needs a smaller storage area for storing communication data. In addition, this reduces an amount of data to be processed, and thereby enables efficient monitoring. Especially, communication data may be captured in duplicate depending on selection of ports to be captured. This duplicate data increases the capture amount. Therefore, the narrowing-down according to the capture amount reduces a possibility of capturing communication data in duplicate.

The narrowing-down according to the captured port count is performed because a fewer number of captured ports reduces power consumption in setting mirroring. The load of copying data in the mirroring may also be reduced.

The narrowing-down processes of steps S36 to S40 may be performed in a desired order. For example, the narrowing-down processes may be performed in order of the narrowing-down according to the capture amount, the narrowing-down according to the captured port count, and the narrowing-down according to the moved VM count. Instead of these three kinds of narrowing-down processes, one or two of them may be performed.

More specifically, at step S32, for example, VM placement plans are determined for a captured object candidate with record number "1" of the captured object candidate table 122f as follows. First, the execution server 100 is selected as an execution server on which a virtual machine serving as a monitoring VM is placed. Then, a VM placement plan is determined so as to place the virtual machines 130, 140, 220 that perform communication using the ports 111b, 111d, and 211a (corresponding to "vSW1-2, "vSW1-4", and "vSW2-1", respectively) on the selected execution server 100. This VM placement plan corresponds to record number "1" of the VM placement plan table 112g. Here, a total amount of CPU resources and a total amount of memory resources needed for running the virtual machines 120, 130, 140, and 220 are 8 GHz and 20 GB, respectively, which are less than the available CPU resource of 8 GHz and memory resource of 24 GB in the execution server 100.

In addition, with respect to the captured object candidate with record number "1" of the captured object candidate table 122f, the execution server 200 is also considered as a placement destination on which a virtual machine serving as a monitoring VM is placed. The VM placement plan for this case corresponds to record number "3" of the VM placement plan table 112g (here, record numbers are given after sorting records according to the moved VM count in the VM placement plan table 112g). In the VM placement plan with record number "3", the available CPU resource of 8 GHz in the execution server 200 is all consumed if the virtual machine that is a monitoring VM, and the virtual machines 130, 140, 220 (the total amount of CPU resources needed is 8 GHz) run on the execution server 200. Therefore, this VM placement plan for reallocating the virtual machine 230 to the execution server 100 is determined.

Since VM placement plans are determined with taking into account the available resources of the execution servers and resources needed for virtual machines, non-realistic VM placement plans are eliminated, thereby streamlining the process for determining a placement.

Further, the VM placement plans with record numbers "2" and "4" of the VM placement plan table 122g correspond to the captured object candidate with record number "2" of the captured object candidate table 122f.

In addition, at step S32, the virtual machines 130, 140, 220, and 230 and the clients 400, 500, and 600 are distinguished as follows. For example, information indicating a correspondence between the machine name and IP address of each virtual machine is previously stored in the storage unit 122. This makes it possible to determine that the IP addresses in the communication data group 122c are the IP addresses of the clients 400, 500, and 600 if these IP addresses are not included in the correspondence. Alternatively, by distinguishing the clients 400, 500, and 600 on the basis of fixed IP addresses, the IP addresses included in the communication data group 122c are determined to be the IP addresses of the clients 400, 500, and 600. By placing the virtual machines that perform communication with clients and the monitoring VM on the same execution server, as in step S32, the communication data with the clients are efficiently collected.

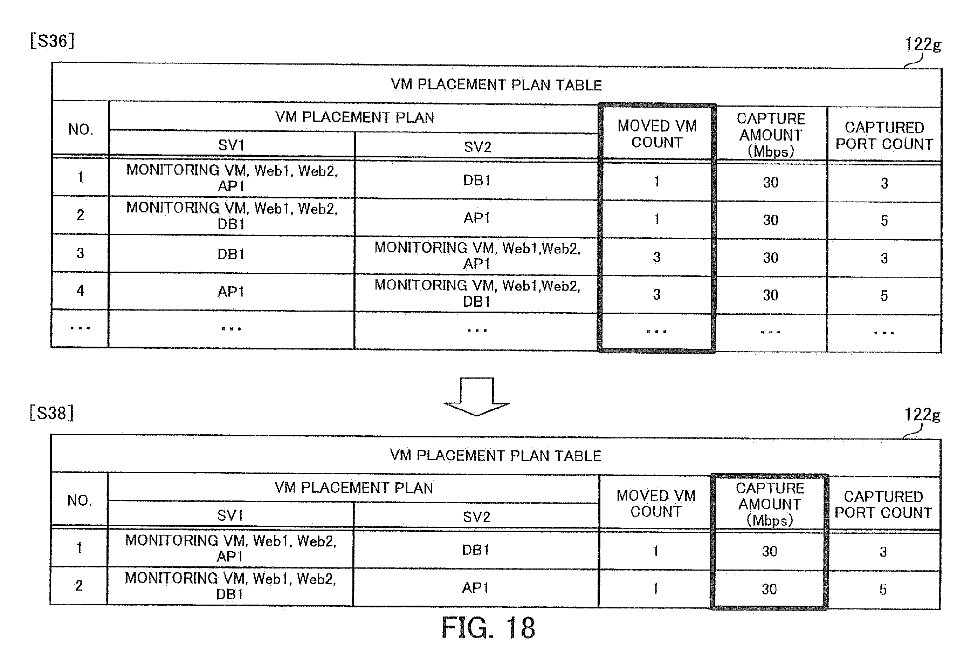

FIG. 18 illustrates a specific example of determining a placement of virtual machines. FIG. 18 exemplifies a process performed by the allocation determination unit 124 to narrow down VM placement plans in accordance with the procedure of the above steps S36 to S40 after the VM placement plan table 122g is obtained. First, the allocation determination unit 124 extracts VM placement plans with the minimum moved VM count (step S36). Referring to the VM placement plan table 122g, the VM placement plans with record numbers "1" and "2" have the minimum moved VM count of one. Therefore, the allocation determination unit 124 obtains the VM placement plans with the numbers "1" and "2" as a result of the narrowing-down. At this time, since the VM placement plans are narrowed down to two, not to one, the allocation determination unit 124 performs the next narrowing-down process.

The allocation determination unit 124 extracts VM placement plans with the minimum capture amount from the remaining VM placement plans (step S38). Referring to the VM placement plan table 122g, the VM placement plans with record numbers "1" and "2" both have the capture amount of 30 Mbps. In this case, the allocation determination unit 124 extracts both of the VM placement plans with record numbers "1" and "2". At this time, since the VM placement plans are narrowed down to two, not to one, the allocation determination unit 124 performs the next narrowing-down process.

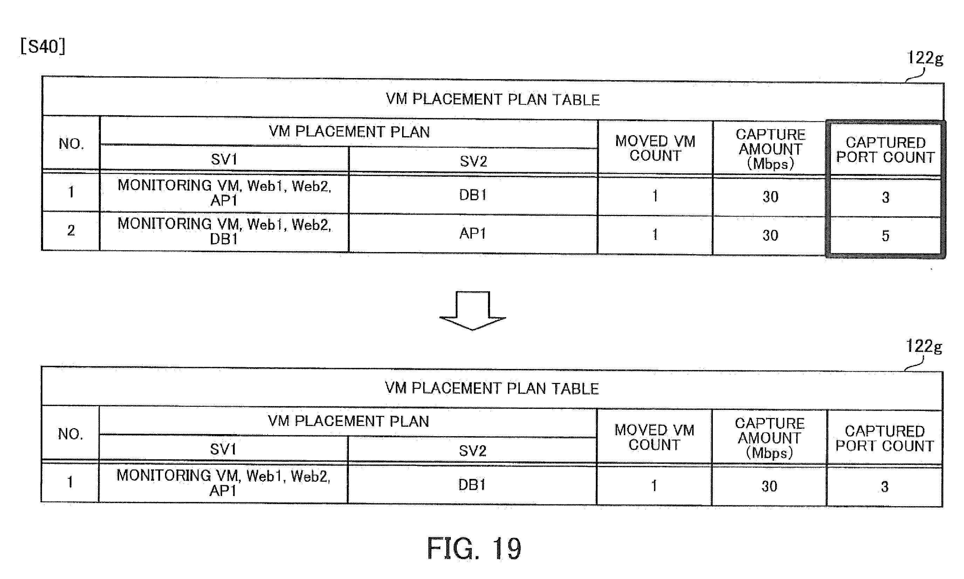

FIG. 19 illustrates a specific example of determining the placement of virtual machines (continued). The allocation determination unit 124 extracts VM placement plans with the minimum captured port count from the remaining VM placement plans (step S40). Referring to the VM placement plan table 122g, the VM placement plan with record number "1" has the minimum captured port count of "3". Therefore, the allocation determination unit 124 finally obtains and determines the VM placement plan with record number "1" as a VM placement for monitoring.

The allocation determination unit 124 requests the allocation control unit 320 to change the placement as indicated by the determined VM placement. Then, the allocation control unit 320 reallocates virtual machines as requested. Referring to the example of the narrowing-down result of FIG. 19, the allocation control unit 320 moves the virtual machine 220 (machine name "AP1") from the execution server 200 to the execution server 100.

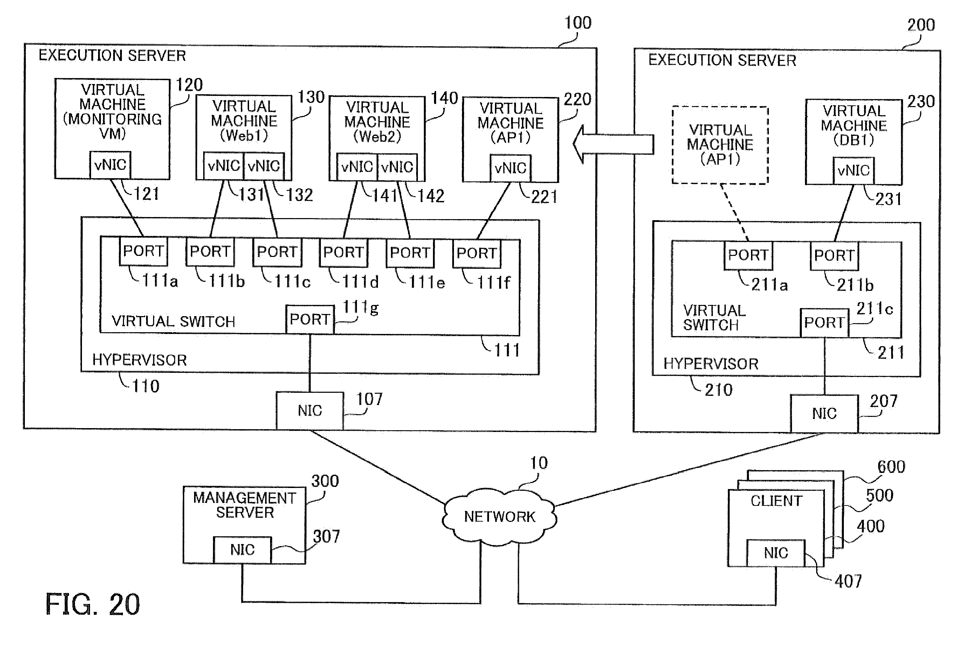

FIG. 20 illustrates a connection example after reallocation. FIG. 20 exemplifies the case where the allocation control unit 320 moves the virtual machine 220 from the execution server 200 to the execution server 100. To this end, the allocation control unit 320 causes the hypervisors 110 and 210 to execute the following procedure (1) to (5).
(1) CPU and memory resources for the virtual machine 220 are reserved in the execution server 100 (destination of movement).
(2) The data in the memory resource allocated to the virtual machine 220 on the execution server 200 (source of movement) is copied to the memory resource newly allocated to the virtual machine 220 on the execution server 100.
(3) The state of the CPU resource allocated to the virtual machine 220 is copied from the execution server 200 to the execution server 100, and then the virtual machine 220 is stopped on the execution server 200.
(4) The virtual machine 220 is started on the execution server 100, and the resources allocated to the virtual machine 220 on the execution server 200 are released.
(5) The network setting for the virtual machine 220 on the execution server 100 (for example, predetermined address) is updated. This enables the vNIC 221 to perform communication with the virtual machines 130, 140, and 230, for example, using the port 111f of the virtual switch 111. In this case, communication data, which has been transmitted and received via the port 211a, now passes through the port 111f. Therefore, by mirroring the port 111f, the communication data, which was transmitted and received via the port 211a before the reallocation, is collected.

In this connection, in this case, the virtual machine 120 serving as a monitoring VM is not moved because the virtual machine 120 continues to run on the execution server 100. On the other hand, the monitoring VM may be moved to another execution server. To this end, the allocation control unit 320 newly configures a monitoring VM on the execution server of a placement destination to start collecting and monitoring data. Alternatively, the virtual machine 120 (monitoring VM) may be moved from the execution server 100 to the execution server of the placement destination in the same way as above.

After moving virtual machines, the allocation control unit 320 reflects the allocation of resources of the execution servers 100 and 200 on the information for managing the physical server resources and VM resources, stored in the storage unit 310.

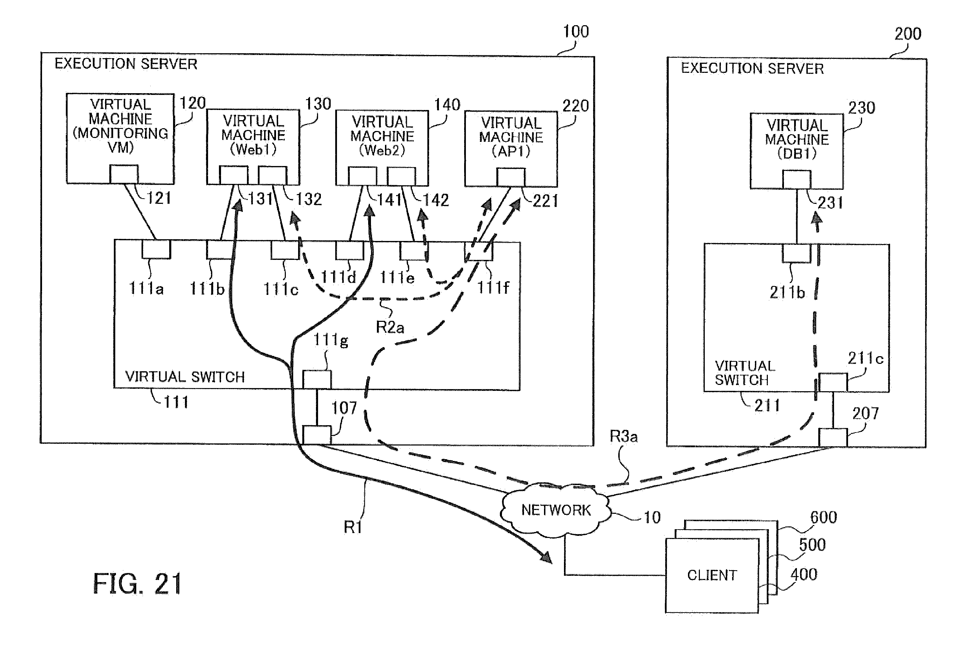

FIG. 21 illustrates an example of communication routes after reallocation. In FIG. 21, the hypervisors 110 and 210, the management server 300, and so on are not illustrated. There are the following communication routes for the Web service provided by the virtual machines 130, 140, 220, and 230 after the virtual machine 220 is moved.

A communication route R1 available for communication between the clients 400, 500, and 600 and the virtual machines 130 and 140 is the same as the communication route R1 of FIG. 7.

A communication route R2a is available for communication between the virtual machine 130 (Web processing unit 133) and the virtual machine 220 (application processing unit 222) and communication between the virtual machine 140 (Web processing unit 143) and the virtual machine 220 (application processing unit 222). The communication route R2a includes a route connecting the virtual machines 130 and 220 via the ports 111c and 111f, and a route connecting the virtual machines 140 and 220 via the ports 111e and 111f.

Further, a communication route R3a is available for communication between the virtual machine 220 (application processing unit 222) and the virtual machine 230 (database processing unit 232). The communication route R3a connects the virtual machines 220 and 230 via the port 111f, the network 10, and the port 211b

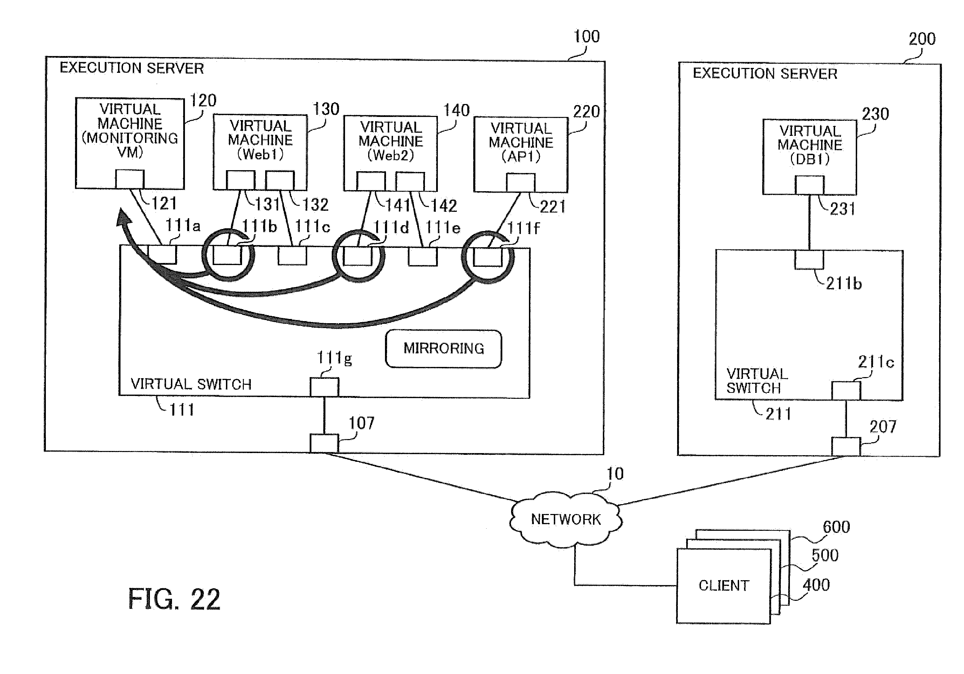

FIG. 22 illustrates an example of data collection at the time of monitoring. The monitoring unit 125 causes the data collection unit 123 to start capturing communication data. The data collection unit 123 causes the virtual switch 111 to copy communication data transmitted and received via the ports 111b, 111d, and 111f, and output the copy to the virtual machine 120 via the port 111a (mirroring). The data collection unit 123 collects the communication data copy generated by mirroring.

The port 111f to be captured is used for transmission and reception of communication data which was transmitted and received via the port 211a before reallocation. In addition, a set of ports 111b, 111d, and 21a was selected as a set of ports that covers all communicating pairs for the Web service of this example. Therefore, the communication data between all communicating pairs is collected by capturing the ports 111b, 111d, and 111f.

The monitoring unit 125 monitors the performance of the Web service provided by the virtual machines 130, 140, 220, and 230, by combining collected communication data, for example.

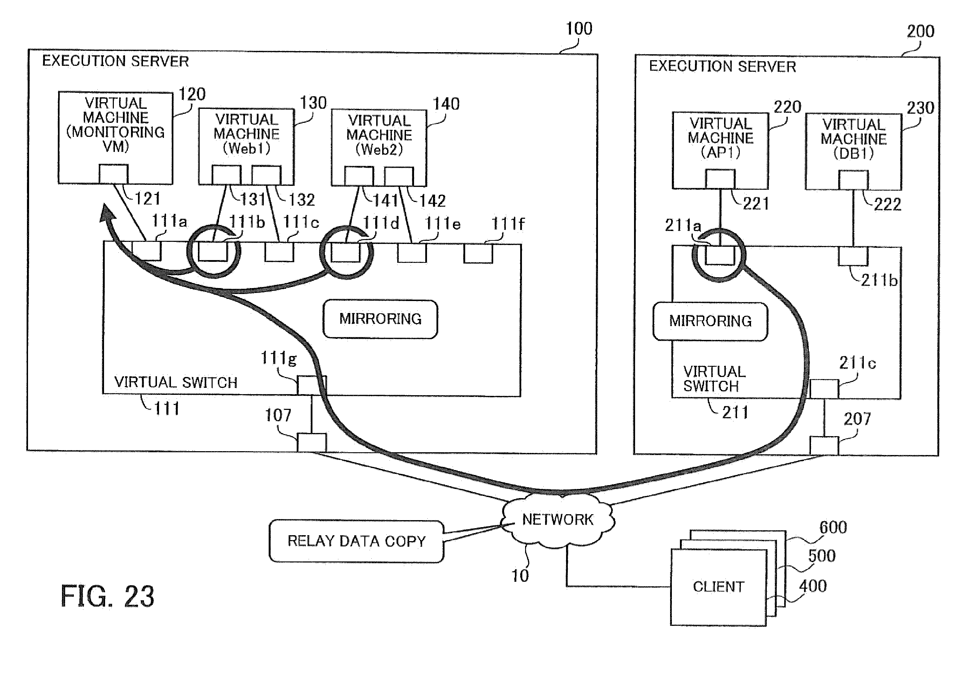

FIG. 23 illustrates another example of data collection at the time of monitoring. FIG. 23 exemplifies the case of collecting communication data without reallocating virtual machines, for comparison with the example of FIG. 22.

In this case, in order for the virtual machine 120 to collect communication data between all communicating pairs, mirroring may be performed with respect to the ports 111b, 111d, and 211a. In this case, communication data passing through the ports 111b and 111d is copied and output by the virtual switch 111 to the virtual machine 120. In addition, communication data passing through the port 211a is copied and sent by the virtual switch 211 to the virtual machine 120 running on the execution server 100.

At this time, the copy of the communication data made by the virtual switch 211 is sent to the execution server 100 over the network 10. The transmission of the copy over the network 10 increases consumption of the bandwidth of the network 10 during the monitoring. As a result, the bandwidth available for the original Web service and the other services provided over the network 10 decreases, which results in efficiency losses.

By contrast, in the information processing system according to the second embodiment, virtual machines are reallocated before data is collected for monitoring. More specifically, one execution server is selected, and the virtual machines are reallocated in order that at least one of virtual machines running on a non-selected execution server and communicating with each other runs on the selected execution server.

This technique enables the monitoring server on the selected execution server to collect communication data between all pairs of virtual machines by collecting incoming and outgoing data of the selected execution server. The technique also eliminates the necessity of transmitting data copies over the network 10, thus reducing the load on the network 10 for the monitoring.

Further, in the case where there is a plurality of placement plans for reallocating virtual machines, information indicating the load of moving the virtual machines and information indicating the load of capture after reallocation are estimated, and a placement plan is selected based on the result of the estimation. More specifically, the load of moving virtual machines is estimated based on the number of virtual machines to be moved. The load of capture is estimated based on a capture amount expected after the reallocation and the number of ports to be captured after the reallocation. Then, the plurality of placement plans is narrowed down so that these loads are small. Selecting a placement plan that imposes a smaller load enables more efficient data collection for monitoring.

In the above description, the allocation determination unit 124 is provided in the virtual machine 120. Other arrangements may be considered. For example, the allocation determination unit 124 may be provided in a different virtual machine from the monitoring unit 125. Alternatively, the allocation determination unit 124 may be provided in the management server 300. Similarly to the allocation determination unit 124, the data collection function of the data collection unit 123 may be provided in another virtual machine or management server 300 so as to execute the data collection function in cooperation with the allocation determination unit 124.

Further, the above description exemplifies the case where a plurality of virtual machines that cooperate with each other is placed on two execution servers 100 and 200. The function of the allocation determination unit 124 may be used in the case where the plurality of virtual machines placed on three or more execution servers cooperates with each other. Further, the above description exemplifies a three tier Web service. Alternatively, the function of the allocation determination unit 124 may be used for monitoring two, or four or more tier services.

The above processing functions can be realized by causing a computer to execute a predetermined program. The program may be recorded on a computer-readable recording medium (for example, recording medium 13). To distribute the program, recording media, on which the program is recorded, may be distributed. Alternatively, the program may be stored in the storage device of a server computer and may be transferred from the server computer to other computers through a network. A computer stores in its local non-volatile storage medium the program recorded on a recording medium or acquired over a network, for example. Then, the computer reads the program from the local storage medium, and runs the program. The computer may sequentially run the acquired program by loading the program to the RAM, without storing the program in a non-volatile storage medium.

According to one embodiment, data is collected efficiently.

## Claims

1. A data collection method for collecting communication data in a system including a plurality of information processing apparatuses (2, 3) each hosting virtual machines (2a, 2b, 3a, 3b) and relay means (2c, 3c) for relaying communication data of the virtual machines (2a, 2b, 3a, 3b), the data collection method comprising:
detecting one or more pairs of virtual machines communicating with each other from a plurality of virtual machines (2a, 2b, 3a, 3b) based on communication data exchanged between the plurality of virtual machines (2a, 2b, 3a, 3b);
selecting one (2) of the plurality of information processing apparatuses (2, 3), and reallocating the plurality of virtual machines (2a, 2b, 3a, 3b) in order that, out of the detected one or more pairs, one (3a) or both of paired virtual machines (3a, 3b) running on a non-selected information processing apparatus (3) run on the selected information processing apparatus (2); and
collecting the communication data relayed by the relay means (2c) running on the selected information processing apparatus (2).

2. The data collection method according to claim 1, wherein, when the plurality of virtual machines (2a, 2b, 3a, 3b) is reallocated, a plurality of placement plans indicating how to reallocate the plurality of virtual machines (2a, 2b, 3a, 3b) is determined for cases where each of the plurality of information processing apparatuses (2, 3) is taken as the selected information processing apparatus, one or both of information indicating a load on the plurality of information processing apparatuses for the reallocating and information indicating a load on the selected information processing apparatus for collecting the communication data are estimated for each of the plurality of placement plans, and one of the plurality of placement plans for reallocating the plurality of virtual machines (2a, 2b, 3a, 3b) is determined based on a result of the estimation.

3. The data collection method according to claim 2, wherein the information indicating the load on the plurality of information processing apparatuses for the reallocating includes a number of virtual machines to be moved to change a current placement of the plurality of virtual machines (2a, 2b, 3a, 3b) to a placement indicated by said each placement plan.

4. The data collection method according to claim 2 or 3, wherein the information indicating the load on the selected information processing apparatus for collecting the communication data includes an amount of communication data to be collected after the plurality of virtual machines is reallocated to change a current placement of the plurality of virtual machines to a placement indicated by said each placement plan.

5. The data collection method according to any one of claims 2 to 4, wherein the information indicating the load on the selected information processing apparatus for collecting the communication data includes a number of ports which are provided in the relay means used for collecting the communication data and from which the communication data is to be collected after the plurality of virtual machines is reallocated to change a current placement of the plurality of virtual machines to a placement indicated by said each placement plan.

6. The data collection method according to any one of claims 1 to 5, wherein the plurality of virtual machines (2a, 2b, 3a, 3b) is reallocated in order that virtual machines communicating with client devices other than the plurality of information processing apparatuses (2, 3) run on the selected information processing apparatus (2).

7. The data collection method according to any one of claims 1 to 6, wherein, when the plurality of virtual machines (2a, 2b, 3a, 3b) is reallocated, the one information processing apparatus and virtual machines to be moved are determined based on information indicating an amount of resources available for the plurality of virtual machines in each of the plurality of information processing apparatuses (2, 3) and information indicating an amount of resources needed for running each of the plurality of virtual machines (2a, 2b, 3a, 3b).

8. An information processing system including a plurality of information processing apparatuses (2, 3) each hosting virtual machines (2a, 2b, 3a, 3b) and relay means (2c, 3c) for relaying communication data of the virtual machines (2a, 2b, 3a, 3b), the information processing system comprising:
allocation determination means (1a) for detecting one or more pairs of virtual machines communicating with each other from a plurality of virtual machines (2a, 2b, 3a, 3b) based on communication data exchanged between the plurality of virtual machines (2a, 2b, 3a, 3b), selecting one (2) of the plurality of information processing apparatuses (2, 3), and determining how to reallocate the plurality of virtual machines (2a, 2b, 3a, 3b) in order that, out of the detected one or more pairs, one (3a) or both of paired virtual machines (3a, 3b) running on a non-selected information processing apparatus (3) run on the selected information processing apparatus (2); and
control means (1b) for locating the plurality of virtual machines (2a, 2b, 3a, 3b) in accordance with the determined reallocation, and controlling the selected information processing apparatus (2) so as to collect the communication data relayed by the relay means (2c) running on the selected information processing apparatus (2).

9. A computer program for collecting communication data in a system including a plurality of information processing apparatuses (2, 3) each hoisting virtual machines (2a, 2b, 3a, 3b) and relay means (2c, 3c) for relaying communication data of the virtual machines (2a, 2b, 3a, 3b), the computer program causing a computer to perform a procedure comprising:
detecting one or more pairs of virtual machines communicating with each other from a plurality of virtual machines (2a, 2b, 3a, 3b) based on communication data exchanged between the plurality of virtual machines (2a, 2b, 3a, 3b);
selecting one (2) of the plurality of information processing apparatuses (2, 3), and reallocating the plurality of virtual machines (2a, 2b, 3a, 3b) in order that, out of the detected one or more pairs, one (3a) or both of paired virtual machines (3a, 3b) running on a non-selected information processing apparatus (3) run on the selected information processing apparatus (2); and
controlling the selected information processing apparatus (2) so as to collect the communication data relayed by the relay means (2c) running on the selected information processing apparatus (2).
